# EUROPÄISCHE PATENTSCHRIFT

(11) **EP 3 246 272 B1**
(45) Veröffentlichungstag und Bekanntmachung des Hinweises auf die Patenterteilung: **01.05.2019**
(21) Anmeldenummer: 17163829.9
(22) Anmeldetag: 30.03.2017
(51) Int. Cl.: B65G 11/08, B65G 11/02, B65G 11/20

(54) **RUTSCHE UND SORTIEREINRICHTUNG SOWIE VERFAHREN ZUM SORTIEREN VON STÜCKGUT**
CHUTE AND SORTING DEVICE AND METHOD FOR SORTING PIECE GOODS
GLISSIÈRE ET DISPOSITIF DE TRI ET PROCÉDÉ DE TRI DE MARCHANDISE AU DÉTAIL

(30) Priorität: 20.05.2016 DE 102016109310
(43) Veröffentlichungstag der Anmeldung: 22.11.2017
(73) Patentinhaber: Deutsche Post AG, 53113 Bonn (DE)
(72) Erfinder: Hartmann, Bernd, 53501 Grafschaft-Leimersdorf (DE); Grafe, Wolfram, 18107 Elmenhorst (DE)
(74) Vertreter: Cohausz & Florack

(56) Entgegenhaltungen:
- EP-A1- 0 184 293
- EP-A1- 2 411 190
- WO-A1-92/21111
- WO-A1-2015/015439
- JP-A- 2008 120 468
- JP-U- H0 297 307
- US-B1- 6 564 922
- US-B1- 7 553 118

## Beschreibung

### Gebiet

Die Erfindung betrifft eine Rutsche für Stückgut, insbesondere Packstücke und/oder Sendungen, mit einem Rutschenboden zum Herunterrutschen des Stückguts mit wenigstens einer, vorzugsweise dem unteren Ende der Rutsche zugeordneten Speichereinrichtung für die entlang des Rutschenbodens heruntergerutschten Stückgüter. Ferner betrifft die Erfindung eine Sortiereinrichtung für Stückgut, insbesondere Packstücke und/oder Sendungen, mit wenigstens zwei übereinander angeordneten Rutschen für Stückgut. Im Übrigen betrifft die Erfindung ein Verfahren zum Sortieren von Stückgütern, insbesondere Packstücken und/oder Sendungen, mit einer Sortiereinrichtung umfassend wenigstens eine Rutsche, bei dem zu sortierende Stückgüter von einer Transporteinrichtung transportiert und wenigstens teilweise in die wenigstens eine Rutsche sortiert werden und bei dem die in die wenigstens eine Rutsche sortierten Stückgüter nach dem Herunterrutschen des Rutschenbodens der wenigstens einen Rutsche von der in einer oberen Aufnahmestellung angeordneten Speichereinrichtung aufgenommen werden.

### Hintergrund

Rutschen für Stückgut der genannten Art werden insbesondere zum Sortieren von Packstücken eingesetzt und als sogenannte Kastenrutschen ausgebildet. Dabei werden die Stückgüter in einer Sortiereinrichtung, einem sogenannten Sorter, nach festgelegten Kriterien in eine Mehrzahl von Rutschen sortiert. In den Rutschen rutschen die Stückgüter entlang des Rutschenbodens nach unten zum Ende der Rutsche, wo die Stückgüter solange in einem Auffangbereich der Rutsche zwischengelagert werden, bis die Stückgüter aus der Rutsche bzw. dem Auffangbereich entnommen werden. Der Auffangbereich stellt insoweit eine Speichereinrichtung der Rutsche bereit. Derartige Rutschen sind zum Beispiel aus WO92/21111A1, US7553118B1, EP0184293A1, WO2015/015439A1, JPH0297307U und US 6564922B1 bekannt. JP2008120468A beschreibt eine Rutsche nach dem Oberbegriff des Anspruchs 1.

Die Sortiereinrichtung zum Sortieren der Stückgüter umfasst neben der wenigstens einen Rutsche der genannten Art auch wenigstens eine Transporteinrichtung, zum Transportieren der zu sortierenden Stückgüter. Bei der Transporteinrichtung handelt es sich insbesondere um einen Gurtförderer oder einen Rollenförderer. Die Stückgüter werden dann von der Transporteinrichtung, insbesondere direkt, nach vorgegebenen Kriterien in verschiedene Rutschen sortiert. Dazu können beispielsweise Leiteinrichtungen, etwa in Form von Klappen, vorgesehen sein, die die Stückgüter von der Transporteinrichtung in die entsprechenden Rutschen leiten oder stoßen. Die Stückgüter rutschen dann die Rutschenböden der entsprechenden Rutschen herunter und werden sodann in den Auffangbereichen an den Enden der Rutschen zwischengespeichert, bis die Stückgüter gemeinsam, nacheinander oder teilweise entnommen werden.

Die Stückguter können beispielweise Produkte oder Waren sein. Insbesondere handelt es sich um Packstücke, bei denen es sich um mit Packungen verpackte Stückgüter, wie Waren, Sendungen oder andere Güter handelt. Sendungen werden typischerweise bestimmten Adressaten zugestellt. Zudem handelt es sich bei Sendungen oftmals um Packstücke, also verpackte Stückgüter. Vor der Zustellung der Sendungen bei den Adressaten der Sendungen erfolgt vielfach eine Vorsortierung in einer Zustellbasis, etwa nach dem räumlichen Gebiet der Adressaten. Bei der Zustellbasis kann es sich beispielsweise um ein sogenanntes Paketzentrum, ein Warenlager oder dergleichen handeln. Die Sendungen können nach der Sortierung zugestellt oder aber weiter sortiert werden, was beispielsweise an einem anderen Ort erfolgen kann als die vorhergehende Sortierung. Die Zustellung kann an Adressaten der Sendungen oder bei entsprechenden Abgabestellen, wie beispielsweise Paketkästen oder Packstationen, bewirkt werden.

Als Stückgüter, Packstücke und/oder Sendungen werden vorliegend recht unterschiedliche Gegenstände angesehen, die vorzugsweise hinsichtlich ihrer Größe und ihres Gewichts mit überschaubarem Aufwand transportiert werden können. Dabei kommen Gegenstände des täglichen Bedarfs, wie Verbrauchsmaterialien oder Lebensmittel ebenso in Frage wie technische Gegenstände und Gerätschaften. In vielen Fällen handelt es sich bei den Sendungen um Briefsendungen, Paketsendungen und/oder Flyer. Dabei umfassen Paketsendungen auch Päckchen, während Flyer auch Prospekte, Broschüren und Zeitschriften sein können.

Wenn die Stückgüter in viele unterschiedliche Gruppen sortiert werden sollen, ist eine entsprechende Anzahl an Rutschen erforderlich. Alternativ müssten die Stückgüter mehrfach nacheinander sortiert werden, um alle Stückgüter in die vorgegebenen Gruppen von Stückgütern zu sortieren. Um Zeit für das Sortieren der Stückgüter zu sparen, bietet es sich an, die unterschiedlichen Sortierschritte teilweise parallel in mehreren Sortiereinrichtungen durchzuführen. Unabhängig, ob die Stückgüter in einer Sortiereinrichtung oder parallel in verschiedenen Sortiereinrichtungen sortiert werden, erfordert das Sortieren sehr viel Platz für die wenigstens eine Sortiereinrichtung. Der Platzbedarf ist dabei umso höher, je größer die Anzahl der Kriterien ist, nach denen die Stückgüter sortiert werden. Dann müssen nämlich insgesamt mehr Rutschen bereitgestellt werden, um die Stückgüter darin zu sortieren. Zudem ist der maximale Durchsatz einer Sortiereinrichtung, also die Anzahl an Stückgütern, die pro Zeiteinheit mit der Sortiereinrichtung sortiert werden können, begrenzt. Ist der maximale Durchsatz nicht ausreichend, muss entweder die Sortiereinrichtung erweitert oder eine weitere Sortiereinrichtung eingesetzt werden, was den Platzbedarf weiter erhöht.

Werden mehrere Sortiereinrichtungen eingesetzt, können diese teilweise übereinander angeordnet werden, um den Platzbedarf zu beschränken. Die Sortiereinrichtungen können in diesem Fall gleichartig aufgebaut sein und/oder eine gleichartige Sortierung durchführen. Dabei können beispielsweise die Transporteinrichtungen der Sortiereinrichtungen übereinander angeordnet werden. Für die Rutschen gilt dies typischerweise nur bedingt, das die in die Rutschen sortierten Stückgüter, insbesondere händisch, aus den Rutschen entnommen werden müssen. Die Auffangbereiche der Rutschen müssen also entsprechend zugänglich sein. Die Zugänglichkeit wird regelmäßig dadurch erreicht, dass die Rutschen aller Sortiereinrichtungen bis auf ein gemeinsames Niveau geführt werden. Dies erfordert es, die Auffangbereiche der Rutschen wenigstens teilweise nebeneinander zu platzieren. Alternativ können auch mehrere Rutschen übereinander angeordnet werden. Allerdings ist dann zusätzlich ein erheblicher konstruktiver Aufwand erforderlich, um die Stückgüter aus den auf unterschiedlichen Niveaus angeordneten Auffangbereichen der Rutschen zu entnehmen. Zudem ist dann auch die Entnahme der Stückgüter aus den Rutschen mit einem zusätzlichen Aufwand verbunden.

### Zusammenfassung einiger beispielhafter Ausführungsformen der Erfindung

Der vorliegenden Erfindung liegt die Aufgabe zugrunde, die Rutsche, die Sortiereinrichtung und das Verfahren jeweils der eingangs genannten und zuvor näher beschriebenen Art derart auszugestalten und weiterzubilden, dass das Sortieren einer großen Anzahl Stückgüter in kurzer Zeit mit einem insgesamt geringen Platzbedarf und Aufwand erfolgen kann.

Bei der vorliegenden Erfindung wird diese Aufgabe durch eine Rutsche mit den Merkmalen des Anspruchs 1 gelöst.

Die Aufgabe ist ferner bei einer Speichereinrichtung nach dem Oberbegriff des Anspruchs 9 dadurch gelöst, dass wenigstens die obere Rutsche nach einem der Ansprüche 1 bis 8 ausgebildet ist und dass die Speichereinrichtung der oberen Rutsche von einer der oberen Rutsche zugeordneten oberen Aufnahmestellung in

Richtung der unteren Rutsche in eine untere Abgabestellung und zurück verstellbar, insbesondere schwenkbar, ausgebildet ist.

Die der Erfindung zugrunde liegende Aufgabe ist auch gemäß Anspruch 13 durch ein Verfahren zum Sortieren von Stückgütern, insbesondere Packstücken und/oder Sendungen, mit einer Sortiereinrichtung, vorzugsweise einer Sortiereinrichtung nach einem der Ansprüche 9 bis 12, umfassend wenigstens eine Rutsche, nach einem der Ansprüche 1 bis 8, gelöst,- bei dem zu sortierende Stückgüter von wenigstens einer Transporteinrichtung transportiert und wenigstens teilweise in die wenigstens eine Rutsche sortiert werden,- bei dem die in die wenigstens eine Rutsche sortierten Stückgüter nach dem Herunterrutschen des Rutschenbodens der wenigstens einen Rutsche von der in einer oberen Aufnahmestellung angeordneten Speichereinrichtung aufgenommen werden,- bei dem die Speichereinrichtung von der oberen Aufnahmestellung in eine untere Abgabestellung verstellt, insbesondere geschwenkt, wird und- bei dem die aufgenommenen Stückgüter von der Speichereinrichtung in der unteren Abgabestellung entnommen oder an ein unter der Speichereinrichtung vorgesehenes Anlagenteil, insbesondere einer weiteren Rutsche, übergeben werden.

Die Erfindung hat erkannt, dass die Rutschen wenigstens einer Sortiereinrichtung platzsparend übereinander angeordnet werden können, wenn die wenigstens eine obere Rutsche mit einer höhenverstellbaren Speichereinrichtung versehen wird, die nach der Aufnahme von Stückgütern von der entsprechenden oberen Aufnahmestellung in eine untere Abgabestellung und zurück verstellt werden kann. Das Verstellen der Speichereinrichtung von der oberen Aufnahmestellung in die untere Abgabestellung vereinfacht das Entnehmen der Stückgüter hinsichtlich des konstruktiven Aufwands für die Sortiereinrichtungen als auch hinsichtlich des für das Handling der Stückgüter erforderlichen Aufwands. Eine geeignete untere Abgabestellung kann bedarfsweise durch ein Schwenken der Speichereinrichtung erreicht werden. Dabei kann das Schwenken um eine Schwenkachse oder bedarfsweise auch gleichzeitig oder nacheinander um mehrere Schwenkachsen erfolgen. Durch das Schwenken der Speichereinrichtung kann alternativ oder zusätzlich eine konstruktiv einfache aber zugleich höchst funktionale Verstellung der Speichereinrichtung von der oberen Aufnahmestellung in die untere Abgabestellung und zurück ermöglicht werden.

Dabei ist im Falle einer Sortiereinrichtung vorgesehen, dass die Speichereinrichtung von einer der oberen Rutsche zugeordneten oberen Aufnahmestellung in Richtung der unteren Rutsche zur unteren Abgabestellung verstellt werden kann. Diese Verstellung der Speichereinrichtung kann bedarfsweise wiederum wenigstens teilweise durch ein Schwenken der Speichereinrichtung um eine Schwenkachse oder mehrere Schwenkachsen, wahlweise gleichzeitig oder nacheinander, erfolgen. Die Stückgüter können dabei beispielsweise direkt von der Speichereinrichtung in der unteren Abgabestellung entnommen werden. Erforderlich ist dies jedoch nicht. Die Stückgüter können auch mit Hilfe der Speichereinrichtung weitertransportiert werden, und zwar an wenigstens einen Ort, an dem dann das tatsächliche, insbesondere händische, Entnehmen der Stückgüter erfolgt. Es erfolgt dann also eine indirekte Abgabe der Stückgüter über die Speichereinrichtung in der Abgabestellung. Die Stückgüter können folglich von der Speichereinrichtung zunächst an einen anderen Anlagenteil der Sortiereinrichtung, insbesondere an eine andere Rutsche, abgegeben werden. Die Entnahme erfolgt dann bedarfsweise von diesem Anlagenteil oder von einem anderen Anlagenteil an das die Stückgüter weitergegeben werden.

Verfahrensmäßig werden die Stückgüter zunächst, insbesondere unsortiert, über eine Transporteinrichtung, die bevorzugt in Form eines Gurtförderers oder Rollenförderers ausgebildet sein kann, in Richtung der wenigstens einen Rutsche transportiert. Der Transport der Stückgüter kann dabei bis direkt an die jeweiligen Rutschen erfolgen. Dies ist aber nicht erforderlich. Zwischen der entsprechenden Rutsche und der Transporteinrichtung können bedarfsweise noch Transporteinheiten vorgesehen sein, die den Transport der Stückgüter von der Transporteinrichtung zur entsprechenden Rutsche bewirken und/oder leiten. Die Sortiereinrichtung umfasst dabei Mittel, die das Sortieren von Stückgütern in die entsprechende wenigstens eine Rutsche hinein bewirken. Entsprechende Mittel, etwa Leitmittel oder Klappen, sind aus dem Stand er Technik bekannt und können dazu dienen, die Stückgüter von der Transporteinrichtung in die Rutsche zu leiten und/oder zu stoßen, etwa in dem sie in den Transportweg der Stückgüter entlang der Transportiereinrichtung eingreifen und dem ungehinderten Transport entlang der Transporteinrichtung entgegenwirken.

Die Stückgüter, die in die wenigstens eine Rutsche sortiert werden, etwa weil die Stückgüter vorgegebenen Kriterien entsprechen, rutschen entlang des Rutschenbodens der Rutsche die Rutsche hinunter und gelangen anschließend zu einer Speichereinrichtung, die sich in einer oberen Aufnahmeposition befindet, in der die Speichereinrichtung die den Rutschenboden herunterrutschenden Stückgüter aufnimmt. Die von der Speichereinrichtung aufgenommen Stückgüter verbleiben für eine gewisse Zeitspanne auf der Speichereinrichtung und werden demnach zwischengespeichert. Aus der oberen Aufnahmestellung wird die Speichereinrichtung zu einem späteren Zeitpunkt in die untere Abgabestellung verstellt. Dieses Verstellen kann bevorzugt durch ein Schwenken der Speichereinrichtung um eine Schwenkachse oder um mehrere Schwenkachsen, wahlweise gleichzeitig oder nacheinander, erfolgen. Das Verstellen der Speichereinrichtung von der oberen Aufnahmestellung in die untere Abgabestellung kann erfolgen, wenn die Speichereinrichtung voll ist. Dies kann beispielsweise der Fall sein, wenn die Speichereinrichtung eine bestimmte Anzahl an Stückgütern aufgenommen hat oder der Platz zur Aufnahme weiterer Stückgüter einen Grenzwert unterschritten hat. Der Grenzwert kann dabei so gewählt werden, dass keine Stückgüter mehr aufgenommen werden können oder nur noch wenig Platz für die Aufnahme weiter Stückgüter vorhanden ist. Alternativ oder zusätzlich kann die Speichereinrichtung aber auch unabhängig von der Füllung derselben mit Stückgütern verstellt werden, etwa auf Anforderung und/oder in bestimmten zeitlichen Abständen bzw. in bestimmten Zeitintervallen.

Nach dem Verstellen der Speichereinrichtung in die untere Abgabestellung werden die Stückgüter von der Speichereinrichtung abgegeben, und zwar beispielsweise an eine unter der Speicheinrichtung vorgesehene Rutsche oder an ein anderes Anlagenteil der Sortiereinrichtung. Die Stückgüter können bedarfsweise aber alternativ oder zusätzlich auch direkt von der Speichereinrichtung in der Abgabestellung entnommen werden.

Erfindungsgemäß ist durch die Speichereinrichtung, deren Verstellung und Integration in die Sortiereinrichtung eine Verbindung von zwei oder mehr separaten Sortiereinrichtungen zu einer gemeinsamen Sortiereinrichtung möglich. Es werden also nicht lediglich Sortiereinrichtungen der bekannten Art übereinander angeordnet, um Platz zu sparen, sondern es wird für eine zusätzliche Funktionalität gesorgt, die dem Handling und/oder dem konstruktiven Aufwand entgegen kommt. Dennoch können mehrere Transporteinrichtungen übereinander platziert und jeder Transporteinrichtung die gewünschte Anzahl an Rutschen zugeordnet werden. Durch die Anpassung von oberen Rutschen wird letztlich eine gemeinsame Sortiereinrichtung bereitgestellt, die bedarfsweise mehrere Transporteirichtungen und den Transporteinrichtungen separat zugeordnete Rutschen übereinander aufweisen kann.

Die Stückgüter können dann wahlweise über die obere Transporteinrichtung oder die untere Transporteinrichtung herangeführt werden, wobei die Sortierung in beiden Fällen gleichartig erfolgen kann. Es kann aber auch vorgesehen sein, dass die Stückgüter wenigstens teilweise die Transporteinrichtungen nacheinander passieren um nacheinander in unterschiedlicher Weise oder nach unterschiedlichen Kriterien sortiert zu werden.

Nachfolgend werden der besseren Verständlichkeit halber und zur Vermeidung unnötiger Wiederholungen die Rutsche, die Sortiereinrichtung und das Verfahren zum Sortieren von Stückgütern gemeinsam beschrieben, ohne jeweils im Einzelnen genau zwischen der Rutsche, der Sortiereinrichtung und dem Verfahren zu unterscheiden, da die diese in hohem Maße analog ausgebildet sein können. Dem Fachmann ist jedoch wenigstens anhand des Kontextes ersichtlich, welche Merkmale hinsichtlich der Rutsche, der Sortiereinrichtung und des Verfahrens jeweils bevorzugt sind.

Bei einer ersten besonders bevorzugten Ausgestaltung der Rutsche ist die Speichereinrichtung vertikal verstellbar. Dies bedeutet nicht, dass die Speichereinrichtung ausschließlich vertikal verstellbar sein muss. Eine teilweise horizontale Verstellung ist ebenfalls möglich, wobei die Verstellung in horizontaler Richtung und die Verstellung in vertikaler Richtung überlagert sein oder nacheinander erfolgen kann. Was hier im Einzelnen bevorzugt ist, hängt wesentlich von der im Einzelfall bevorzugten Weitergabe der Stückgüter mittels der Speichereinrichtung ab. Dies kann wiederum beeinflusst sein von der Ausgestaltung der Sortiereinrichtung und/oder von der Art der Stückgüter selbst. Jedenfalls bewirkt die Speichereinrichtung aber einen Transport der Stückgüter nach unten, so dass die Stückgüter auf einem niedrigeren Niveau der Sortiereinrichtung entnommen werden können. Besonders bevorzugt ist dabei ein Verstellen, das wenigstens teilweise durch ein Schwenken bewirkt wird. Dies kann konstruktiv einfach erreicht werden und/oder zu einer bevorzugten Weitergabe der Stückgüter führen kann, etwa ohne die Stückgüter zu beschädigen und/oder unter Einsparung weiterer Weitergabemittel zum Weitergeben der Stückgüter.

Das Schwenken der Speichereinrichtung kann, soweit dies ausreichend ist, um eine einzige Schwenkachse erfolgen. Die Bewegung der Speichereinrichtung lässt sich jedoch spezifischer an die gewünschte Funktionalität der Speichereinrichtung anpassen, wenn die Speichereinrichtung um zwei oder mehr Schwenkachsen geschwenkt wird, um die Speichereinrichtung von der oberen Aufnahmestellung in die untere Abgabestellung zu verstellen. Einfach und effektiv kann es dabei sein, wenn das in Transportrichtung der Stückgüter entlang der Rutsche hintere Ende nach unten und zurück nach oben schwenkbar ist, und zwar etwa um eine wenigstens im Wesentlichen horizontale Schwenkachse. Alternativ oder zusätzlich kann aber auch das in Transportrichtung der Stückgüter entlang der Rutsche vordere Ende der

Speichereinrichtung nach unten und wieder nach oben schwenkbar sein. Auch dabei ist die Schwenkachse bevorzugt wenigstens im Wesentlichen horizontal ausgerichtet. Wenn die Speichereinrichtung um mehr als eine Schwenkachse geschwenkt wird, um von der oberen Aufnahmestellung in die untere Abgabestellung zu gelangen und/oder umgekehrt, kann das Schwenken um die Schwenkachsen wenigstens teilweise gleichzeitig oder auch nacheinander erfolgen. Hierbei kann auch der Art der Stückgüter Rechnung getragen und/oder können die räumlichen Gegebenheiten der Sortiereinrichtung berücksichtigt werden.

Erfindungsgemäß weist die Speichereinrichtung wenigstens ein Fingerelement, insbesondere eine Mehrzahl von Fingerelementen, auf das/die in Querrichtung des Rutschenbodens verteilt angeordnet ist/sind. Die Fingerelemente erlauben bedarfsweise eine recht individuelle Verstellung der Speichereinrichtung. So können die Fingerelemente zumindest in bestimmten Grenzen unabhängig voneinander verstellt werden, so dass das Verstellen bedarfsweise an bestimmte Randbedingungen angepasst werde kann. Beispielsweise können einzelne Fingerelemente weniger weit nach unten in die Abgabestellung verstellt werden als andere Fingerelemente, um einen Kontakt der Fingerelemente mit darunter befindlichen Anlagenteilen oder Stückgütern zu verhindern. So können Beschädigungen der entsprechenden Elemente vermieden werden. Wenn die Speichereinrichtung Stückgüter aufnimmt, die sich in ihrer Größe und/oder anderweitig unterscheiden, kann die Verstellung der Finger an die aufgenommenen Stückgüter angepasst werden. So kann an einigen Stellen der Speichereinrichtung ein ausgeprägtes Verstellen angebracht sein, während andere Stellen der Speichereinrichtung weniger ausgeprägt verstellt werden sollten. Hierauf kann durch die Fingerelemente bedarfsweise individuell eingegangen werden. Auch kann mittels mehrerer in Querrichtung der Speichereinrichtung verteilter Fingerelemente eine Leitung der Stückgüter in einer Richtung quer zur Speichereinrichtung erreicht werden. Grundsätzlich kann aber auch ein einziges Fingerelement für eine Speichereinrichtung ausreichen, etwa bei sehr kleinen Stückgütern. Bei größeren Stückgütern kann sich dagegen eine Mehrzahl von Fingerelementen anbieten.

Die Verteilung der Fingerelemente quer zum Rutschenboden muss dabei nicht gleichmäßig vorgesehen sein, auch wenn dies der Einfachheit halber regelmäßig bevorzugt sein wird. Um die Anzahl der Fingerelemente und deren Quererstreckung zu begrenzen sowie eine Beeinträchtigung der Fingerelemente gegenseitig zu vermeiden, können die Fingerelemente in Querrichtung des Rutschenbodens voneinander beabstandet sein. Die Querrichtung ist dabei bedarfsweise insbesondere als Richtung quer zur Transportrichtung der Stückgüter entlang des Rutschenbodens vor der Speichereinrichtung zu verstehen. Alternativ oder zusätzlich bietet es sich an, wenn die Fingerelemente mit ihren freien Enden wenigstens entgegen der Transportrichtung der Stückgüter entlang der Rutsche weisen. Dabei ist die Transportrichtung der Stückgüter in vielen Fällen in Längsrichtung der Rutsche zwischen dem oberen Ende der Rutsche und dem unteren Ende der Rutsche ausgerichtet. Es kommt nicht unbedingt darauf an, dass die Fingerelemente exakt entgegen die Transportrichtung der Stückgüter weisen. Die Fingerelemente weisen mit ihren freien Enden jedoch vorzugsweise mehr in diese Richtung als quer zur Transportrichtung oder in die Transportrichtung der Stückgüter. Durch das Verstellen der freien Enden der Fingerelemente in Richtung der unteren Abgabestellung kann dann ein vorderer Teil der Speichereinrichtung nach unten verstellt werden. Dies ist für die Abgabe der Stückgüter in der Abgabestellung grundsätzlich bevorzugt.

In diesem Zusammenhang kann es besonders bevorzugt sein, wenn die freien Enden der Fingerelemente das in der Transportrichtung der Stückgüter entlang der Rutsche vordere Ende der Speichereinrichtung definieren. Durch das Verstellen der Finger kann also das vordere Ende der Speichereinrichtung nach unten verstellt werden, was für die Weitergabe der von der Speichereinrichtung in der oberen Aufnahmestellung aufgenommenen Stückgüter vorteilhaft sein kann. Wird dieses vordere Ende der Speichereinrichtung nach unten verstellt, insbesondere geschwenkt, können die Stückgüter beispielsweise prinzipiell entgegen der ursprünglichen Transportrichtung entlang der oberen Rutsche nach unten abgegeben werden bzw. von der Speichereinrichtung rutschen. Damit die Fingerelemente in einfacher Weise auch gemeinsam verstellt werden können, ohne dass dadurch eine teilweise Verstellung von Fingerelementen unabhängig voneinander auszuschließen, können die Fingerelemente alternativ oder zusätzlich an einem Ende mit wenigstens einem Handelement verbunden sein. Das Handelement kann dabei beispielsweise als Stabelement, Stangenelement oder Plattenelement ausgebildet sein. Alternativ oder zusätzlich erstreckt sich das Handelement wenigstens im Wesentlichen über die gesamte Breite der Speichereinrichtung. Die Enden der Fingerelemente, die mit dem Handelement verbunden sind, liegen dabei insbesondere den freien Enden der Fingerelementen gegenüber, so dass sich die Fingerelemente ähnlich einer Hand von dem Handelement in Richtung ihrer freien Enden erstrecken. So könne die freien Enden in der bevorzugten und zuvor beschriebenen Weise gegenüber dem Handelement verstellt werden, wobei über das Handelement eine bedarfsweise überlagernde Verstellung der Fingerelemente insgesamt möglich ist. Dann bietet es sich hinsichtlich einer angemessenen und funktionalen Verstellung der Speichereinrichtung alternativ oder zusätzlich an, wenn das Handelement dem in der Transportrichtung der Stückgüter entlang der Rutsche hinteren Ende der Speichereinrichtung zugeordnet ist oder dieses hintere Ende definiert.

Die freien Enden der Fingerelemente können in einer vertikalen Richtung verstellbar sein. Das Verstellen der Speichereinrichtung von der oberen Aufnahmestellung in die untere Abgabestellung kann dann zweckmäßig mit einem Verstellen der freien Enden der Fingerelemente vertikal nach unten einhergehen und umgekehrt. Die Verstellung der freien Enden der Fingerelemente muss dabei nicht zwingend ausschließlich vertikal erfolgen, auch wenn dies bevorzugt sein kann, um ein einfaches und präzises Verstellen der Speichereinrichtung zwischen der oberen Aufnahmestellung und der unteren Abgabestellung zu ermöglichen. Das Verstellen der Fingerelemente wird zudem vereinfacht, wenn die Fingerelemente nach unten und/oder oben gegenüber dem Handelement verstellt werden können. Dies gilt umso mehr für ein Verstellen durch Schwenken, und zwar insbesondere für den Fall, dass die Fingerelemente mit einem Ende mit dem Handelement verbunden sind, gegenüber dem die Fingerelemente dann leicht geschwenkt werden können.

Alternativ oder zusätzlich kann auch das Handelement in einer vertikalen Richtung verstellbar ausgebildet sein. Auch in diesem Falle ist es für die zweckmäßige und einfach durchzuführende Verstellung der Speichereinrichtung bevorzugt, wenn das Handelement um wenigstens eine Schwenkachse geschwenkt werden kann. Die Fingerelemente können alternativ oder zusätzlich auch dafür ausgebildet sein, in einer wenigstens teilweise vertikalen Richtung gekrümmt zu werden. Die Krümmung der Fingerelemente kann dabei als Schwenken, insbesondere gegenüber dem Handelement, angesehen werden. Durch das Krümmen können die von der Speichereinrichtung aufgenommenen Stückgüter beim Verstellen der Speichereinrichtung von der oberen Aufnahmestellung in die unteren Abgabestellung beispielsweise nicht versehentlich vom der Speichereinrichtung rutschen. Dazu können die Fingerelemente beispielsweise nach oben gekrümmt werden. Dabei können die Fingerelemente, bedarfsweise abhängig von den aufgenommenen Stückgütern unabhängig voneinander bzw. unterschiedliche zueinander nach oben gekrümmt werden. Alternativ oder zusätzlich können die Fingerelemente aber auch nach unten gekrümmt werden, etwa wenn sich die Speichereinrichtung in der Nähe der unteren Abgabestellung befindet, um so die Abgabe der Stückgüter in der unteren Abgabestellung zu vereinfachen. Das Krümmen der Finger nach unten kann beispielsweise dazu führen, dass die Stückgüter von selbst von der Speichereinrichtung rutschen. Weitere Mittel, um dieses zu besorgen, sind daher bedarfsweise entbehrlich. Bedarfsweise können die Fingerelemente, insbesondere abhängig von den aufgenommenen Stückgütern, unabhängig voneinander bzw. unterschiedlich zueinander gekrümmt werden. Besonders einfach ist es dabei unter Umständen für den Fall, dass die Fingerelemente mit einem gemeinsamen Handelement verbunden sind, wenn die Fingerelemente gegenüber dem Handelement wenigstens teilweise vertikal nach unten und ober gekrümmt bzw. wieder gestreckt werden können.

Die für das Verstellen, insbesondere das Krümmen, der Fingerelemente günstige Ausgestaltung der Fingerelemente umfasst erfindungsgemäß pro Fingerelement jeweils wenigstens zwei sich gemeinsam in Längsrichtung des Fingerelements bis zum freien Ende des Fingerelements erstreckende flexible Flankenelemente. Die Flexibilität der Fingerelemente erlaubt die einfache Verstellung, insbesondere Krümmung bzw. Streckung, der Fingerelemente. Zudem sind die flexiblen Flankenelemente eines Fingerelements vorzugsweise in Längsrichtung der Fingerelemente jeweils über eine Mehrzahl von Stegen flexibel miteinander verbunden. Dies erlaubt ein Verstellen, insbesondere ein Krümmen der Fingerelemente bzw. deren freien Enden von einer unteren Stellung in eine obere Stellung und zurück, die wenigstens teilweise in vertikaler Richtung erfolgt, und zwar insbesondere gegenüber dem Handelement. Auf diese Weise wird eine einfache und zweckmäßige Verstellung der Speichereinrichtung ermöglicht.

Die beschriebene Ausgestaltung ermöglicht in weiter bevorzugter Ausgestaltung der Fingerelemente den sogenannten Fin Ray Effekt, der bei Schwanzflossen von Knochenfischen beobachtet wird. Drückt man mit dem Finger seitlich gegen die Schwanzflosse, krümmt sich die Schwanzflosse infolge des Fin Ray Effekts nicht weg, sondern die Schwanzflosse biegt sich dem Finger entgegen. Möglich wird dies durch den speziellen Aufbau der Schwanzflosse, der durch die Fingerelemente in der vorbeschriebenen Ausgestaltung nachgebildet wird. In diesem Zusammenhang können die flexiblen Flankenelemente beispielsweise durch flexible Flankenelemente oder durch Gliederketten aus schwenkbar oder gelenkig miteinander verbundenen starren Kettengliedern bereitgestellt werden.

Dabei wird zudem die Flexibilität lediglich in einer Raumrichtung gefordert, und zwar insbesondere in der Raumrichtung, in der die Krümmung der Fingerelemente erfolgen soll. In den Raumrichtungen senkrecht zu dieser Raumrichtung ist die Flexibilität der Flankenelemente nicht zwingend erforderlich. Daher können die Flankenelemente beispielsweise auch streifenförmig ausgebildet sein, wobei sich quer zum Streifen eine erhöhte Biegesteifigkeit ergeben kann. Alternativ ist aber auch eine stabförmige Ausgestaltung der Flankenelemente möglich. Die entsprechende Flexibilität der Flankenelemente erlaubt eine Krümmung der Fingerelemente ausgehend von einer gestreckten Stellung in eine gekrümmte Stellung nach oben oder unten. Dabei muss die maximal gestreckte Stellung der Fingerelemente beim Verstellen der Speichereinrichtung zwischen der oberen Aufnahmestellung und der unteren Abgabestellung nicht unbedingt erreicht werden. Es kann also lediglich vorgehen werden, dass die Krümmung nach oben oder nach unten beim Verstellen der Speichereinrichtung verstärkt und wieder abgeschwächt wird. Es kann aber auch vorgesehen sein, dass wenigstens einige Fingerelemente von einer nach oben gekrümmten Stellung in eine nach unten gekrümmte Stellung und zurück verstellt werden, während die Speichereinrichtung von der oberen Aufnahmestellung in die untere Abgabestellung und zurück verstellt wird.

Der Aufbau der Fingerelemente und deren Anbindung etwa an das Handelement kann so erfolgen, dass die Fingerelemente gegebenenfalls weiter gekrümmt werden, wenn die Stückgüter von der Speichereinrichtung aufgenommen werden. Die Stückgüter können dann in Schwerkraftrichtung gegen wenigstens einzelne Fingerelemente drücken und analog zur Schwanzflosse des Knochenfischs infolge des Fin Ray Effekts nach oben in Richtung der Stückgüter gekrümmt werden. Für den Fall, dass die Fingerelemente an einem Handelement angebunden sind, führt dies dazu, dass sich die Hand zunehmend, wenn auch vorzugsweise nicht vollständig, schließt. Die Stückgüter werden dabei sicher in der Speichereinrichtung gehalten, und zwar vorzugsweise auch wenigstens teilweise während des Verstellens der Speichereinrichtung von der oberen Aufnahmestellung in die untere Abgabestellung.

Um Fingerelemente bereitzustellen, die den Fin Ray Effekt zeigen können, bietet es sich an, wenn die Stege und die zugehörigen flexiblen Flankenelemente jeweils einen spitzen Winkel α, vorzugsweise zwischen 10° und 80°, und einen stumpfen Winkel β, vorzugsweise zwischen 100° und 170° aufweisen. Damit eine gezielte Krümmung der Fingerelemente durchgeführt werden kann, etwa während das Speicherelement von der oberen Aufnahmestellung in die unteren Abgabestellung verstellt wird, können die flexiblen Flankenelemente der Fingerelemente jeweils, insbesondere über eine Antriebseinheit, in Längsrichtung der Fingerelemente gegeneinander verstellbar sein. Durch das Verstellen der flexiblen Flankenelemente gegeneinander in Längsrichtung der Fingerelemente können diese mehr oder weniger gekrümmt und/oder mehr oder weniger gestreckt werden, je nachdem wie dies beim Verstellen der Speichereinrichtung von der oberen Aufnahmestellung in die unteren Abgabestellung und zurück gewünscht ist. Das Verstellen der flexiblen Flankenelemente gegeneinander kann also zum Anheben und/oder Absenken der Fingerelemente, insbesondere gegenüber dem Handelement, genutzt werden.

Das Krümmen der Fingerelemente kann auch dazu genutzt werden, die freien Enden der Fingerelemente in der oberen Aufnahmestellung fluchten mit dem angrenzenden Rutschenboden auszurichten. Die ist insbesondere dann vorteilhaft, wenn der Rutschenboden mit einer Neigung und/oder Krümmung auf die freien Enden der Fingerelemente trifft. Dann kann der Rutschenboden mit gleichartiger Neigung und/oder Krümmung in die Speichereinrichtung übergehen. Es kann letztlich ein stetiger Verlauf der Krümmung bzw. Neigung im Übergang vom Rutschenboden zur Speichereinrichtung bereitgestellt werden.

Zum Verstellen der flexiblen Flankenelemente der Fingerelemente bieten sich entsprechende Antriebseinheit an, die an sich bereits aus dem Stand der Technik bekannt sind, etwa in Form von Linearantrieben. Um die Fingerelemente, insbesondere deren freie Enden, unabhängig voneinander verstellen zu können, bietet es sich bedarfsweise weiter an, wenn unterschiedliche Antriebseinheiten unterschiedlichen Fingerelementen zugeordnet sind. Bedarfsweise kann zur sehr flexiblen und/oder individuellen Verstellung der Fingerelemente jedes Fingerelement mit einer separaten Antriebseinheit g versehen sein. Um den apparativen Aufwand zu verringern können aber auch an wenigstens einer Antriebseinheit wenigstens zwei Fingerelemente zum Zwecke des Verstellens angeschlossen sein. Die Zuordnung der Fingerelemente zu den Antriebseinheit en kann dabei beliebig gewählt werden und muss auch nicht gleichförmig für alle Fingerelemente erfolgen. Es kann beispielswiese wenigstens ein separat verstellbares einzelnes Fingerelement geben, das an eine separate Antriebseinheit angeschlossen ist, während an wenigstens einem anderen Antriebselement eine Mehrzahl von Fingerelementen angeschlossen ist.

Damit die Anzahl der benötigten Fingerelemente quer zur Rutsche bzw. zum Rutschenboden überschaubar bleibt und/oder die Fingerelemente nicht übermäßig breit ausgebildet werden müssen, bietet es sich an, wenn die Fingerelemente eine flexible, die Zwischenräume zwischen den Fingerelementen überbrückende Materialbahn tragen. Auf diese Weise kann verhindert werden, dass Stückgüter zwischen die Fingerelemente gelangen und das Verstellen der Speichereinrichtung blockieren. Die Materialbahn kann aus unterschiedlichen Materialien gebildet werden. Die Materialbahn sollte flexibel genug sein, damit die Fingerelemente wenigstens teilweise unabhängig voneinander verstellt werden können. Gleichzeitig sollte die Materialbahn so steif sein, dass die Materialbahn nicht zu weit in die Spalten zwischen den Fingerelementen eintaucht. Zudem werden die Stückgüter durch glatte Materialbahnen weniger stark gebremst wie durch raue Materialbahnen. Die gewünschte Gleitreibung kann dabei vorzugsweise abhängig von der Anordnung und Ausgestaltung der Speichereinrichtung, abhängig von den Stückgütern und/oder abhängig von der Verstellung der Speichereinrichtung von der oberen Aufnahmestellung in die untere Aufnahmestellung durch eine geeignete Materialauswahl gewählt werden.

Alternativ oder zusätzlich kann um jeweils wenigstens ein Fingerelement eine umlaufende, bedarfsweise angetriebene, Materialbahn vorgesehen sein. Die Materialbahn kann dann ähnlich eines Gurts eines Gurtförderers ausgebildet sein und bedarfsweise ebenso entlang des wenigstens einen zugehörigen Fingerelements gehalten sein. Wenn die Materialbahn angetrieben ist, und zwar vorzugsweise in Längsrichtung der Fingerelemente, können die Stückgüter beim Aufnehmen durch die Speichereinrichtung abgebremst werden. Es kann aber auch dafür gesorgt werden, dass die Stückgüter zuverlässig von der Speichereinrichtung aufgenommen, insbesondere auf diese gezogen, wird. Zur Verringerung des apparativen Aufwands kann die Materialbahn um mehrere Fingerelemente umlaufen. Es kann aber alternativ oder zusätzlich vorgesehen sein, dass wenigstens eine Materialbahn exklusiv um ein einziges Fingerelement umläuft. Die entsprechende Ausgestaltung der Speichereinrichtung dann somit an die jeweiligen Anforderungen angepasst werden.

Die Verstellung der Speichereinrichtung von einer oberen Aufnahmestellung in die untere Abgabestellung und zurück kann anhand wenigstens eines Signals wenigstens eines Sensors erfolgen. Der wenigstens eine Sensor kann dabei beispielsweise erfassen ob, wie viele und/oder in welcher Anordnung Stückgüter auf der Speichereinrichtung vorgesehen sind. Alternativ oder zusätzlich kann der wenigstens eine Sensor erfassen, ob, wie viele und/oder in welcher Anordnung Stückgüter unterhalb der Speichereinrichtung, insbesondere in der darunter angeordneten Rutsche vorgesehen sind. So werden beispielsweise Beschädigungen der Stückgüter vermieden und/oder eine effiziente Handhabung der Stückgüter erreicht. Allgemein gesprochen kann mit Hilfe des wenigstens einen Sensors der Füllstand an Stückgütern auf der Speichereinrichtung und/oder darunter bzw. in den Rutschen erfasst und anhand des wenigstens einen Füllstands eine Steuerung der Verstellung der Speichereinrichtung bewirkt werden. Zum Verstellen der Speichereinrichtung von einer oberen Aufnahmestellung in die untere Abgabestellung und zurück kann zudem eine Steuerungseinrichtung und/oder eine Antriebseinrichtung vorgesehen sein. Bedarfsweise ist kein händischer Eingriff erforderlich. Die Verstellung kann nach vorbestimmten Vorgaben automatisch bzw. selbsttätig erfolgen.

Hinsichtlich der Sortiereinrichtung ist es bevorzugt, wenn die Speichereinrichtung zur Abgabe der Stückgüter von der oberen Rutsche in die untere Rutsche nach unten verstellbar ausgebildet ist. Dies kann bedarfsweise einfach und zuverlässig durch ein Schwenken der Speichereinrichtung um wenigstens eine Schwenkachse erfolgen, die vorzugsweise wenigstens im Wesentlichen horizontal ausgerichtet ist. Das Schwenken kann dabei auch dazu dienen, dass die Stückgüter von der Speichereinrichtung in der unteren Abgabestellung in die untere Rutsche rutschen. Alternativ oder zusätzlich kann dies aber auch durch ein Verstellen, Schwenken und/oder Krümmen der Fingerelemente der Speichereinrichtung nach unten erreicht werden, sofern die Speichereinrichtung entsprechende Fingerelemente aufweist. Um eine Beschädigung der Stückgüter zu vermeiden oder um eine gezielte Abgabe der Stückgüter sicherzustellen, kann das in der Transportrichtung der Stückgüter entlang der oberen Rutsche vordere Ende der Speichereinrichtung wenigstes im Wesentlichen bis zur unteren Rutsche, insbesondere bis zum Rutschenboden der unteren Rutsche, nach unten verstellbar sein. Bedarfsweise kann auch diese Verstellung durch ein Schwenken der Speichereinrichtung um wenigstens eine Schwenkachse und/oder durch Verstellen, Schwenken und/oder Krümmen der etwaig vorhandenen Fingerelemente erreicht werden. Das Verstellen der Speichereinrichtung kann beispielweise so erfolgen, dass die Stückgüter beim Verstellen der Speichereinrichtung von der oberen Aufnahmestellung in die untere Abgabestellung nicht entlang der unteren Rutsche bzw. des Rutschenbodens der unteren Rutsche nach unten, etwa in einen Auffangbereich der unteren Rutsche, rutschen. Dies wird bedarfsweise durch die Anordnung der Speichereinrichtung relativ zur unteren Rutsche bzw. zum Rutschenboden der unteren Rutsche erreicht. Diese Anordnung kann nämlich so gewählt sein, dass der verbleibende Spalt zwischen dem Rutschenboden und der Speichereinrichtung kein Durchrutschen der Stückgüter durch den Spalt erlaubt, obwohl bedarfsweise die Stückgüter sich teilweise auch gegen die untere Rutsche abstützen können.

Alternativ oder zusätzlich kann das in Transportrichtung der Stückgüter entlang der oberen Rutsche hintere Ende der Speichereinrichtung bis wenigstens im Wesentlichen auf Höhe eines dem Ende der unteren Rutsche zugeordneten Auffangbereichs für Stückgüter nach unten verstellbar sein. Das entsprechende Verstellen des hinteren Endes der Speichereinrichtung kann nach oder wenigstens teilweise parallel zum Verstellen des vorderen Endes der Speichereinrichtung in Richtung der unteren Rutsche erfolgen, wobei das vordere Ende der Speichereinrichtung bedarfsweise bis zur Abgabe der Stückgüter in die untere Rutsche nach unten verstellt werden kann. Durch das Absenken des hinteren Endes der Speichereinrichtung bis auf das Niveau der unteren Rutsche, insbesondere bis auf das Niveau des Auffangbereichs für Stückgüter der unteren Rutsche, kann sichergestellt werden, dass die Stückgüter von der Speichereinrichtung einfach entnommen werden können. Die Stückgüter werden dann also vorzugsweise nicht vollständig an die untere Rutsche übergeben. In einer Zwischenstellung können die Stückgüter aber von der unteren Rutsche und der Speichereinrichtung, insbesondere dem vorderen Ende der Speichereinrichtung gehalten werden. Danach rutschen die Stückgüter vorzugsweise entlang der Speichereinrichtung nach hinten, etwa in Richtung des Handelements. Das Verstellen des hinteren Endes der Speicheinrichtung kann auch in diesem Fall der Einfachheit halber durch ein Schwenken des hinteren Endes der Speichreinrichtung, bedarfsweise des Handelements, bewerkstelligt werden.

Um einen hohen Durchsatz an Stückgütern zu erreichen, die pro Zeiteinheit von der Sortiereinrichtung sortiert werden können, bietet es sich an, dass die obere Rutsche mit einem oberen Ende an eine obere Transporteinrichtung für zu sortierende Stückgüter grenzt. Alternativ oder zusätzlich kann die untere Rutsche mit einem oberen Ende an eine untere Transporteinrichtung für zu sortierende Stückgüter grenzen. Die Sortiereinrichtung kann also bedarfsweise zwei Transporteinrichtungen zum Heranführen von zu sortierenden Stückgütern aufweisen, die wenigstens teilweise unabhängig voneinander und/oder parallel zueinander in die wenigstens eine obere Rutsche und die wenigstens eine untere Rutsche sortiert werden können. Zum Zwecke des Sortierens bietet es sich an, wenn eine Mehrzahl von der unteren Transporteinrichtung zugeordneten unteren Rutschen und eine Mehrzahl von der oberen Transporteinrichtung zugeordneten oberen Rutschen vorgesehen sind. Die oberen Rutschen können dabei jeweils bedarfsweise mit einer Speichereinrichtung wie beschrieben ausgerüstet sein, die von der der jeweiligen oberen Rutsche zugeordneten oberen Aufnahmestellung in Richtung der unteren Rutsche nach unten in eine untere Abgabestellung verstellt werden kann. Alternativ oder zusätzlich können die Transporteinrichtungen als Gurtförderer mit einem umlaufenden Gurt und/oder als Rollenförderer ausgebildet sein.

Verfahrensmäßig bevorzugt ist es im Übrigen, wenn beim Verstellen der Speichereinrichtung von der oberen Aufnahmestellung in die untere Abgabestellung mehrere Fingerelemente der Speichereinrichtung nach unten gekrümmt werden. Auf diese Weise kann die Verstellung der Speichereinrichtung nach unten einfach erfolgen. Alternativ oder zusätzlich können die Stückgüter durch das entsprechende Krümmen wenigstens einiger Fingerelemente leicht und zuverlässig abgegebene werden. Bedarfsweise rutschen die Stückgüter so leichter von der Speichereinrichtung herunter. Dabei können die Fingerelemente alternativ oder zusätzlich in der oberen Aufnahmestellung und/oder während des Verstellens der Speichereinrichtung nach unten auch nach oben gekrümmt werden, etwa um ein versehentliches Herunterrutschen von Stückgütern von der Speichereinrichtung zu verhindern oder die Stückgüter sicher auf der Speichereinrichtung zu halten. Das Krümmen der Fingerelemente nach unten und/oder nach oben wird dabei beispielsweise einfach und genau durch ein Verstellen von Flankenelementen der Fingerelemente gegeneinander bewirkt, wozu wenigstens eine Antriebseinheit mit wenigstens einem Fingerelement verbunden ist.

Als besonders zweckmäßig für eine geordnete Abgabe der Stückgüter von der Speichereinrichtung in der unteren Abgabestellung hat sich das Verstellen bzw. Absenken der Speichereinrichtung, insbesondere des vorderen Endes der Speichereinrichtung und/oder der freien Enden der Fingerelemente der Speichereinrichtung, in Richtung der unteren Abgabestellung bis wenigstens im Wesentlichen bis auf den Rutschenboden der unter der oberen Rutsche vorgesehenen unteren Rutsche erwiesen. Dabei kann der minimale Abstand zwischen der Speichereinrichtung, des vorderen Endes der Speichereinrichtung und/oder der freien Enden der Fingerelemente der Speichereinrichtung einerseits und dem Rutschenboden der unteren Rutsche geringer sein als die Höhe der von der Speichereinrichtung aufgenommenen Stückgüter. Auf diese Weise kann erreicht werden, dass die Stückgüter den Rutschenboden der unteren Rutsche nicht hinunterrutschen, sondern wenigstens teilweise durch die Speichereinrichtung gehalten werden. Zum Entnehmen der Stückgüter von der Speichereinrichtung kann deren hinteres Ende anschließend, bedarfsweise weiter, nach unten abgesenkt werden. Dabei können die Stückgüter wahlweise auf der Speichereinrichtung verbleiben oder über das hintere Ende der Speichereinrichtung in die untere Rutsche gelangen, insbesondere rutschen, wobei ersteres zur Vermeidung von Beschädigungen der Stückgüter bevorzugt sein kann.

Alternativ oder zusätzlich kann die Speichereinrichtung, insbesondere das hintere Ende der Speichereinrichtung und/oder das Handelement der Speichereinrichtung, beim Verstellen der Speichereinrichtung in die untere Abgabestellung wenigstens im Wesentlichen auf einen dem hinteren Ende der unteren Rutsche zugeordneten Auffangbereich der unteren Rutsche abgesenkt werden. Der Auffangbereich der unteren Rutsche ist dabei vorzugsweise auf einem Niveau angeordnet, von dem die Stückgüter einfach aus der unteren Rutsche entnommen werden können. Wenn dann die Speichereinrichtung auf die beschriebene Art etwa auf das Niveau des Auffangbereichs der unteren Rutsche abgesenkt wird, ermöglicht dies ebenfalls ein einfaches Entnehmen der Stückgüter, etwa von Hand, und zwar von der Speichereinrichtung in der unteren Abgabestellung.

Dabei kann der minimale Abstand zwischen der Speichereinrichtung der oberen Rutsche, insbesondere dem hinteren Ende der Speichereinrichtung und/oder dem Handelement der Speichereinrichtung, einerseits und dem Auffangbereich der unteren Rutsche andererseits geringer sein als die Höhe der von der Speichereinrichtung aufgenommenen Stückgüter. Dies hat den Vorteil, dass die Speichereinrichtung sehr weit nach unten in Richtung des Auffangbereichs der unteren Rutsche verstellt wird, so dass die Stückgüter einfach aus der Speichereinrichtung entnommen werden können. Dann sollte sichergestellt werden, dass sich beim Verstellen der Speichereinrichtung von der oberen Aufnahmestellung in die untere Abgabestellung keine Stückgüter im Auffangbereich der unteren Rutsche befinden, um keine Stückgüter zu beschädigen. Es kann aber auch ein minimaler Abstand zwischen der Speichereinrichtung der oberen Rutsche, insbesondere dem hinteren Ende der Speichereinrichtung und/oder dem Handelement der Speichereinrichtung, einerseits und dem Auffangbereich der unteren Rutsche andererseits vorgesehen sein, der größer ist als die Höhe der Stückgüter, und zwar insbesondere der im Auffangbereich der unteren Rutsche befindlichen Stückgüter. Auf diese Weise kann eine Beschädigung von im Auffangbereich der unteren Rutsche vorhandenen Stückgütern verhindert werden. Die Stückgüter können dann aber immer noch mit vertretbarem Aufwand aus der Speichereinrichtung der oberen Rutsche entnommen werden.

Nachfolgend wird die Erfindung anhand einer lediglich Ausführungsbeispiele darstellenden Zeichnung näher erläutert. In der Zeichnung zeigt
- Fig. 1A-B: ein Detail einer erfindungsgemäßen Sortiereinrichtung mit einer erfindungsgemäßen Rutsche zur Durchführung des erfindungsgemäßen Verfahrens in einer perspektivischen Schnittansicht und in einer seitlichen Schnittansicht,
- Fig. 2A-C: eine Speichereinrichtung der Rutsche aus Fig. 1 in einer schematischen Schnittansicht,
- Fig. 3: ein Detail einer Speichereinrichtung der Sortiereinrichtung aus Fig. 1 in einer perspektivischen Schnittansicht,
- Fig. 4: ein Fingerelement einer Leiteinrichtung einer erfindungsgemäßen Rutsche in einer perspektivischen Seitenansicht,
- Fig. 5A-C: die Höhenverstellung des Fingerelements aus Fig. 5 in einer perspektivischen Seitenansicht und
- Fig. 6: ein alternatives Fingerelement einer Leiteinrichtung einer erfindungsgemäßen Rutsche in einer perspektivischen Seitenansicht.

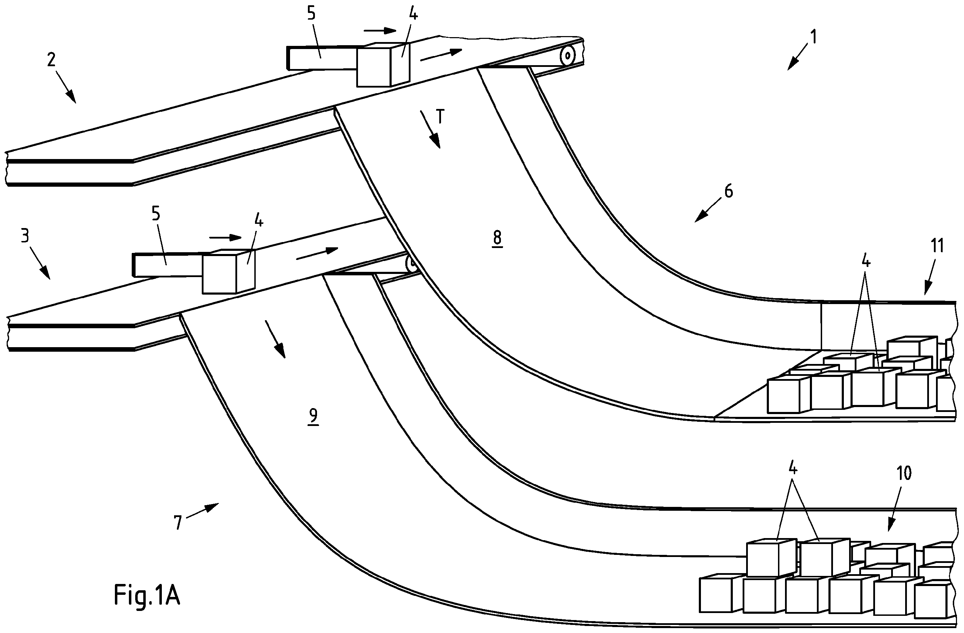

In den Fig. 1A-B ist ein Teil einer Sortiereinrichtung 1 dargestellt, die zwei übereinander angeordnete Transporteinrichtungen 2,3 aufweist. Jede der Transporteinrichtung 2,3 ist bei der dargestellten und insoweit bevorzugten Sortiereinrichtung 1 als Gurtförderer ausgebildet. Die Transporteinrichtungen 2,3 dienen dem Transport von zu sortierenden Stückgütern 4. Die Stückgüter 4 werden, wie dies grundsätzlich aus dem Stand der Technik bekannt ist, nach vorgegebenen Kriterien sortiert. Dazu kann bedarfsweise wenigstens ein, insbesondere optischer, Sensor vorgesehen sein, der bestimmte Parameter, beispielswiese in Form von Barcodes, der Stückgüter 4 erfasst. Die Parameter lassen sich dann mit den vorgegebenen Kriterien abgleichen. Entsprechend des Abgleichs werden die Stückgüter 4 dann von der Transporteinrichtung 2,3 über Leiteinrichtungen 5, die bei der dargestellten und insoweit bevorzugten Sortiereinrichtung 1 in Form von Klappen ausgebildet sind, in entsprechende Rutschen 6,7 geleitet oder gestoßen. Dabei ist jeder Transporteinrichtung 2,3 nacheinander eine Reihe von Rutschen 6,7 zugeordnete, die jeweils bestimmte Gruppen von Stückgütern 4 aufnehmen, die sich in Bezug auf die vorgegebenen Kriterien unterscheiden. Folglich werden die Stückgüter 4 solange entlang der Reihe von Rutschen transportiert, bis die Stückgüter 4 an der Rutsche angekommen sind, in die die Stückgüter 4 aufgrund der vorgegebenen Kriterien geleitet werden sollen, was durch das Eingreifen einer entsprechenden Leiteinrichtung 5 bewerkstelligt wird.

Bei den Stückgütern 4 handelt es sich insbesondere um Packstücke, die wiederum vorzugsweise Paketsendungen darstellen. Es handelt sich also vornehmlich um Pakete und Päckchen zum Versand an Adressaten. Die Sortiereinrichtung 1 ist dabei vorzugsweise Teil einer Zustellbasis, in der Paketsendungen angeliefert, sortiert und nach dem Sortieren gruppiert weitertransportiert werden, um letztlich die Zustellung der Stückgüter 4 beim Adressaten zu bewirken. Die Sortierung kann daher nach Adressmerkmalen, etwa der Postleitzahl, der Straße oder dem Adressaten selbst, erfolgen. Vorliegend kann es sich aber auch um eine Sortiereinrichtung 1 eines Warenlagers handeln, in dem Stückgüter 4 in Form von Waren sortiert werden, um gemeinsam an einen anderen Ort transportiert zu werden. Die Sortiereinrichtung 1 kann aber auch wenigstens einer Produktionsanlage nachgeschaltet sein, um die produzierten Produkte für eine nachfolgende Verwendung derselben zu sortieren.

Nachdem die Stückgüter 4 in die dafür vorgesehenen Rutschen 6,7 abgeworfen worden sind, gleiten die Stückgüter 4 die Rutschenböden 8,9 der entsprechenden Rutschen 6,7 nach unten in Richtung des Endes der Rutsche 6,7. Die Längserstreckung der Rutschen 6,7 ist dabei aus Platzgründen vorzugsweise quer zur Längserstreckung der Transporteinrichtungen 2,3 angeordnet. Dabei sind die der oberen Transportiereinrichtung 2 zugeordneten Rutschen 6 bei der dargestellten und insoweit bevorzugten Sortiereinrichtung 1 über den der unteren Transporteinrichtung 3 zugeordneten unteren Rutschen 7 angeordnet. Stückgüter 4, die in die unteren Rutschen 7 geleitet oder abgeworfen werden, rutschen die Rutschenböden 9 herunter und gelangen am Ende der Rutschen 7 in Auffangbereiche 10 der Rutschen 7 in denen sich die Stückgüter 4 ansammeln und solange bereitgehalten werden, bis die Stückgüter 4, insbesondere von Hand, aus den Auffangbereichen 10 der unteren Rutschen 7 entnommen werden.

In den oberen Rutschen 6 rutschen die Stückgüter 4 die Rutschenböden 8 hinunter, um am Ende der Rutsche 6 von einer Speichereinrichtung 11 aufgenommen zu werden, die sich dazu in einer oberen Aufnahmestellung befindet. Von der Speichereinrichtung 11 werden bedarfsweise nach und nach weitere Stückgüter 4 aufgenommen. Die entsprechenden Stückgüter 4 werden dabei über eine gewisse Zeitspanne in der Speichereinrichtung 11 zwischengespeichert, und zwar beispielsweise bis die Speichereinrichtung 11 voll ist oder bis die Stückgüter 4 aus der Sortiereinrichtung 1 entnommen werden sollen. Dazu kann die Speichereinrichtung 11 von der oberen Aufnahmestellung in eine untere Abgabestellung verstellt werden. Ist die Speichereinrichtung 11 in der unteren Abgabestellung angeordnet, können die zuvor aufgenommenen Stückgüter 4 leichter, insbesondere von Hand, von der Speichereinrichtung 11 entnommen werden, da diese tiefer angeordnet und besser erreichbar ist.

Die Speichereinrichtung 11 kann aber alternativ auch so in die untere Abgabestellung verstellt werden, dass die Stückgüter 4 von der Speichereinrichtung 11 an weitere Anlagenteile der Sortiereinrichtung 1, insbesondere an die unter der Speichereinrichtung 11 vorgesehenen Rutsche 7, abgegeben werden. Dann können die Stückgüter 4 beispielsweise aus dem Auffangbereich 10 der unteren Rutsche 7 entnommen werden. Dabei können Stückgüter 4 von der oberen Rutsche 6 und Stückgüter 4 von der unteren Rutsche 7 zusammengeführt werden. Es kann aber auch vorgesehen sein, die Stückgüter 4 aus der oberen Rutsche 6 nur dann in die untere Rutsche 7 weiterzuleiten, wenn sich in der unteren Rutsche 7 keine weiteren Stückgüter 4 befinden, um eine unerwünschtes Vermischen von Stückgütern 4 zu vermeiden, die aufgrund vorgegebener Kriterien unterschiedlichen Gruppen von Stückgütern 4 angehören. Aufgrund dieser Problematik ist es grundsätzlich bevorzugt, wenn die Stückgüter 4 direkt von der sich in der unteren Abgabestellung befindlichen Speichereinrichtung 11 entnommen und die Stückgüter 4 nicht in die untere Rutsche 7 abgegeben werden.

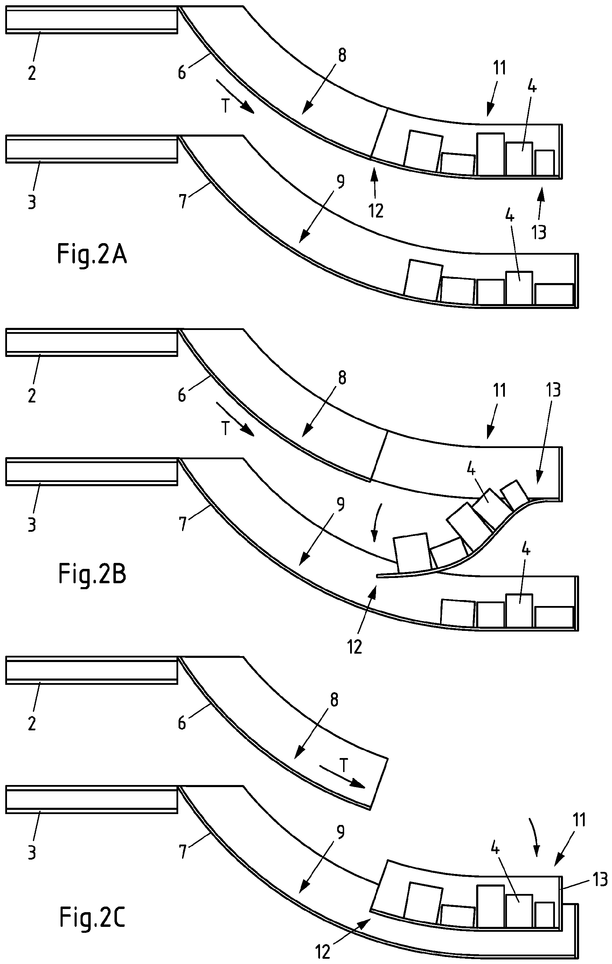

Das Verstellen der Speichereinrichtung 11 erfolgt bei der dargestellten und insoweit bevorzugten Sortiereinrichtung 1, wie dies schematisch in der Fig. 2A-C dargestellt ist. Zunächst befindet sich die Speichereinrichtung 11 in der oberen Aufnahmestellung, wie dies in der Fig. 2A der Fall ist. Die Speichereinrichtung 11 kann dabei wie dargestellt an die Kontur des Rutschbodens 8 der oberen Rutsche 6 angepasst und bedarfsweise selbst gekrümmt sein. Aus der oberen Aufnahmestellung wird das in Transportrichtung T der Stückgüter 4 entlang der oberen Rutsche 6 vordere Ende 12 der Speichereinrichtung 11 nach unten in Richtung der unteren Rutsche 7 geschwenkt, wie dies in der Fig. 2B dargestellt ist. Das Schwenken wird bei der dargestellten und insoweit bevorzugten Sortiereinrichtung 1 gestoppt, bevor die Speichereinrichtung 11 in Anlage an die untere Rutsche 7 erfolgt, obwohl dies nicht zwingend der Fall sein muss. Vorliegend das vordere Ende 12 der Speichereinrichtung 11 nur so weit nach unten geschwenkt, dass die Stückgüter 4 sicher von der Speichereinrichtung 11 gehalten werden und nicht versehentlich von der Speichereinrichtung 11 in die untere Rutsche 7 herunterrutschen. In einem nächsten oder auch wenigstens steilweise parallel verlaufenden Schritt wird das in Transportrichtung T der Stückgüter 4 entlang der oberen Rutsche 6 hintere Ende 13 der Speichereinrichtung 11 nach unten geschwenkt, jedoch bedarfsweise ohne die untere Rutsche 7 zu berühren, um dort angeordnete Stückgüter 4 nicht zu beschädigen. Gleichwohl wird das hintere Ende 13 der Speichereinrichtung 11, wie in der Fig. 2C dargestellt, soweit nach unten geschwenkt, dass die Stückgüter 4 leicht, insbesondere von Hand, von der Speichereinrichtung 11 entnommen werden können. Nachdem die Stückgüter 4 oder einzelne Stückgüter 4 entnommen worden sind, wird die Speichereinrichtung 11 wieder in umgekehrter Reihenfolge nach oben in die Aufnahmestellung zurückverstellt.

Die Speichereinrichtung 11 der wenigstens einen Rutsche 6 kann aber grundsätzlich auch auf andere Weise verstellt werden. So kann anstelle eines Schwenkens der Speichereinrichtung 11 um wenigstens eine Schwenkachse grundsätzlich auch eine lineare Verstellung der Speichereinrichtung 11 in vertikaler Richtung erfolgen. Alternativ oder zusätzlich kann das vertikale Verstellen der Speichereirichtung 11 auch mit einem horizontalen Verstellen der Speichereinrichtung 11 einhergehen, beispielsweise um das Entnehmen der Stückgüter 4 aus der Speichereinrichtung 11 weiter zu vereinfachen.

Die Verstellung der Speichereinrichtung 11 von einer oberen Aufnahmestellung in die untere Abgabestellung und zurück kann anhand wenigstens eines Signals wenigstens eines nicht dargestellten Sensors erfolgen. Der wenigstens eine Sensor kann dabei beispielsweise erfassen ob, wie viele und/oder in welcher Anordnung Stückgüter 4 auf der Speichereinrichtung 11 vorgesehen sind. Alternativ oder zusätzlich kann der wenigstens eine Sensor erfassen, ob, wie viele und/oder in welcher Anordnung Stückgüter 4 unterhalb der Speichereinrichtung 11, insbesondere in der darunter angeordneten Rutsche 7 vorgesehen sind. Bedarfsweise kann mit Hilfe des wenigstens einen Sensors der Füllstand an Stückgütern 4 auf der Speichereinrichtung 11, darunter und/oder in wenigstens einer Rutsche 6,7 erfasst und anhand des wenigstens einen Füllstands eine Steuerung der Verstellung der Speichereinrichtung 11 bewirkt werden, wozu eine entsprechende Steuerungseinrichtung und/oder eine entsprechende Antriebseinrichtung vorgesehen sein kann.

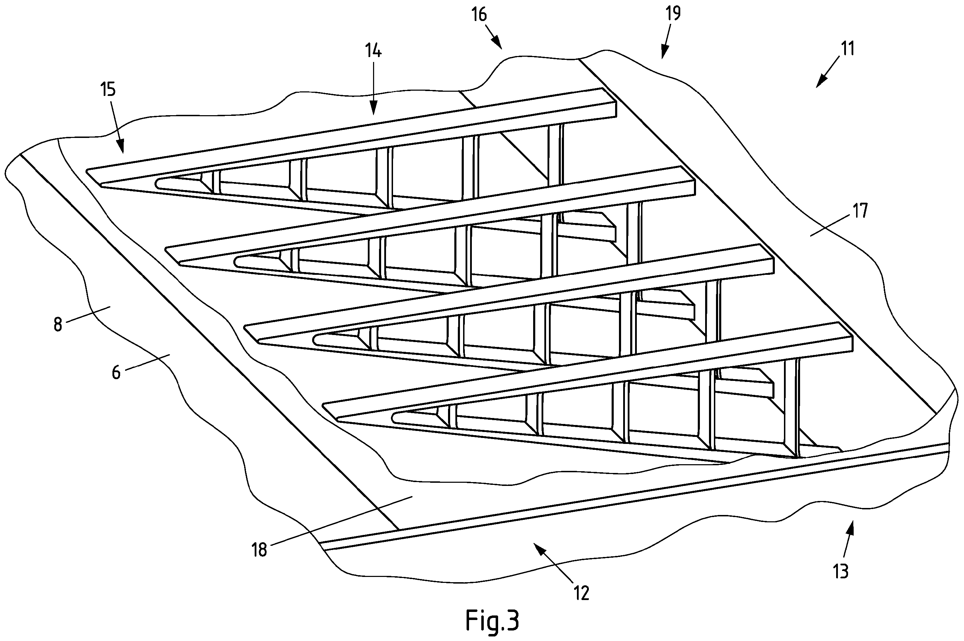

Wie beispielhaft in der Fig. 3 wiedergegeben ist, weist bei der dargestellten und insoweit bevorzugten Sortiereinrichtung 1 die Speichereinrichtung 11 eine Reihe von quer zur Rutsche 6 verteilt und untereinander beabstandet angeordnete Fingerelemente 14 auf. Die Fingerelemente 14 weisen freie Enden 15 auf, die das vordere Ende 12 der Speicheinrichtung 11 definieren. Die hinteren Enden 16 der Fingerelemente 14 sind an wenigstens einem Handelement 17 angebracht, das vorliegend in Form einer Strebe ausgebildet ist. Das Handelement 17 trägt dabei wie die Fingerelemente 14 eine Materialbahn 18, die sich wenigstens im Wesentlichen über die gesamte Oberseite der Speichereinrichtung 11 erstreckt und die von der Speichereinrichtung 11 aufgenommenen Stückgüter 4 gestützt wird. Die Materialbahn 18 verhindert ein Blockieren der Speichereinrichtung 11 durch Eingreifen in die Zwischenräume zwischen den Fingerelementen 14. Bei der dargestellten und insoweit bevorzugten Speichereinrichtung 11 sind die Fingerelemente 14 in der Aufnahmestellung leicht nach oben gekrümmt, um sich an die Kontur der Rutsche 6 anzupassen. So kann ein stetiger Verlauf der Kontur entlang des Rutschenbodens 8 der oberen Rutsche 6 und der Speichereinrichtung 11 erreicht werden. Zum Verstellen der Fingerelemente 14, insbesondere dem Krümmen der Fingerelemente 14 sind diese mit wenigstens einer nicht im Einzelnen dargestellten Antriebseinheit 19 versehen. Diese kann auf alle Fingerelemente 14, einzelne Fingerelemente 14 oder auch nur auf ein Fingerelement 14 wirken, je nachdem wie dies erforderlich erscheint. Die Antriebseinheiten 19 können bekannte Antriebe wie Linearantriebe sein und sind daher der Übersichtlichkeit halber nicht dargestellt.

Infolge der wenigstens einen Antriebeinheit 19 können die Fingerelemente 14 nach oben und nach unten, und zwar gegenüber dem Handelement 17 gekrümmt werden. Dies führt letztlich zu einem Schwenken des vorderen Endes 12 der Speichereinrichtung 11 nach unten oder nach oben. Nach oben gekrümmte Fingerelemente 14 können dazu genutzt werden, ein Herunterrutschen der aufgenommenen Stückgüter 4 von der Speichereinrichtung 11 nach vorne zu verhindern und/oder die Stückgüter 4 gezielt nach hinten in Richtung des Handelements 17 rutschen zu lassen. Ebenso ist es möglich, die Fingerelemente 14 nach unten zu krümmen, um die Stückgüter 4 bedarfsweise in der Abgabestellung an die untere Rutsche 7 abzugeben, sofern dies gewünscht ist. Wenn wenigstens einzelne Fingerelement 14 unabhängig voneinander verstellt bzw. gekrümmt werden können, kann die Verstellung der Fingerelemente 14 an die von der Speichereinrichtung 11 aufgenommenen oder an die sich unter der Speichereinrichtung 11 in der unteren Rutsche 7 befindlichen Stückgüter 4 angepasst werden, etwa um Beschädigungen der Stückgüter 4 zu vermeiden.

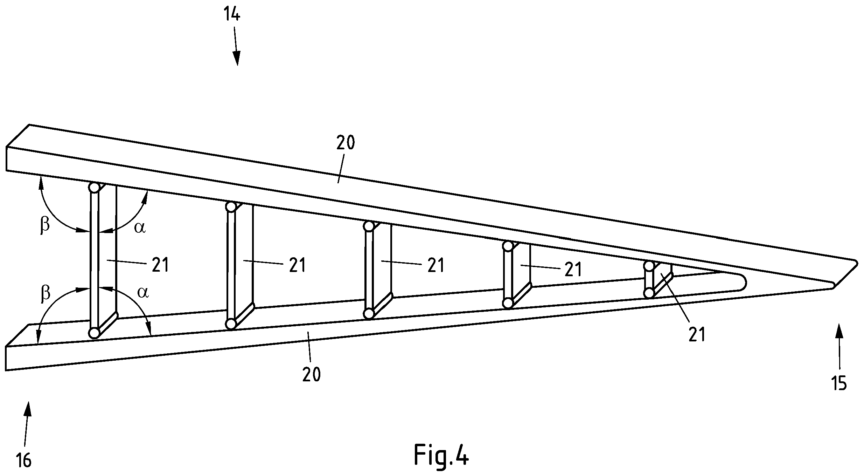

In der Fig. 4 ist ein Fingerelement 14 einer Speichereinrichtung 11 einer Rutsche 6 dargestellt. Das Fingerelement 14 umfasst zwei Flankenelemente 20, die bei dem dargestellten und insoweit bevorzugten Fingerelement 14 gemeinsam von einem links dargestellten, mit dem Handelement 17 verbundenen hinteren Ende 16 des Fingerelements 14 zum gegenüberliegenden, rechts dargestellten freien Ende 15 des Fingerelements 14 verlaufen. Dabei nähern sich die Flankenelemente 20 in Richtung des freien Endes 15 kontinuierlich einander an, bis die Flankenelemente 20 beim dargestellten und insoweit bevorzugten Fingerelement 14 am freien Ende 15 des Fingerelements 14 ineinander übergehen. Daher wird ein sich in eine Richtung verjüngende, konisch zulaufende Fingerelement 14 erhalten. Zwischen den Flankenelementen 20 sind über die Länge des Fingerelements 14 verteilt Stege 21 vorgesehen, über die die Flankenelemente 20 miteinander verbunden sind. Bei dem dargestellten und insoweit bevorzugten Fingerelement 14 sind die Stege 21 an den gegenüberliegenden Enden jeweils schwenkbar, insbesondere gelenkig, mit den Flankenelementen 20 verbunden. Alternativ könnten die Stege 21 flexibel ausgebildet sein, um eine Bewegung der Stege 21 gegenüber den Flankenelementen 20 zu ermöglichen. Die Stege 21 sind bei dem dargestellten und insoweit bevorzugten Fingerelement 14 in gleichmäßigen Abständen über die Länge des Fingerelements 14 verteilt. Dies ist jedoch nicht zwingend erforderlich. Auch ist es lediglich der Einfachheit halber bevorzugt, dass die Stege 21 parallel zueinander verlaufen. Besonders zweckmäßig ist es jedoch, dass die Stege 21 mit jedem der Flankenelemente 20 auf einer Seite einen spitzen Winkel α und auf der gegenüberliegenden Seite einen stumpfen Winkel β bilden.

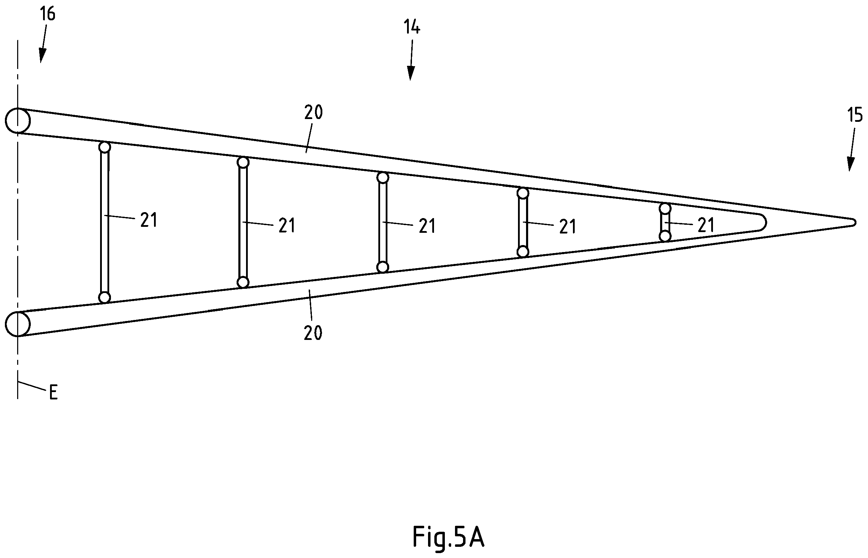

Die dargestellten und insoweit bevorzugten Flankenelemente 20 sind flexibel ausgebildet, so dass sich die Flankenelemente 20 biegen lassen, wobei sich das Fingerelement 14 mehr oder weniger krümmt, was insbesondere in den Fig. 5A-C dargestellt ist. Durch das Krümmen der Fingerelemente 14 werden die freien Enden 15 der Fingerelemente 14 insbesondere nach oben oder unten bewegt. Dies führt letztlich zu einer Höhenverstellung der Fingerelemente 14 insgesamt bzw. zu einem Schwenken der Fingerelemente 14, insbesondere um die Handelement 17, das wiederum schwenkbar an der Rutsche 6 angeordnet sein kann. Die Flankenelemente 20 können dazu beispielsweise aus einem Metall oder einem Kunststoff gebildet werden. Gleiches gilt für die Stege 21, die jedoch nicht flexibel ausgebildet sein müssen.

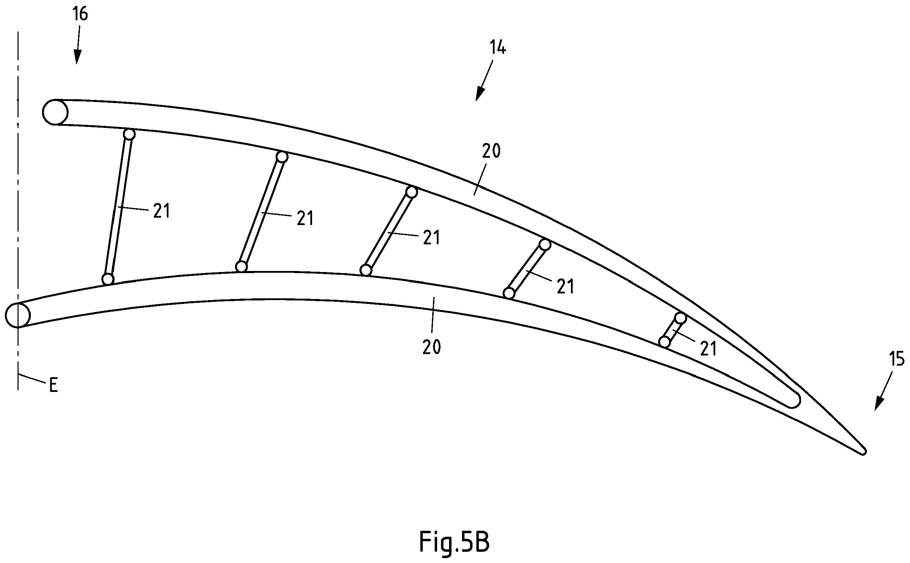

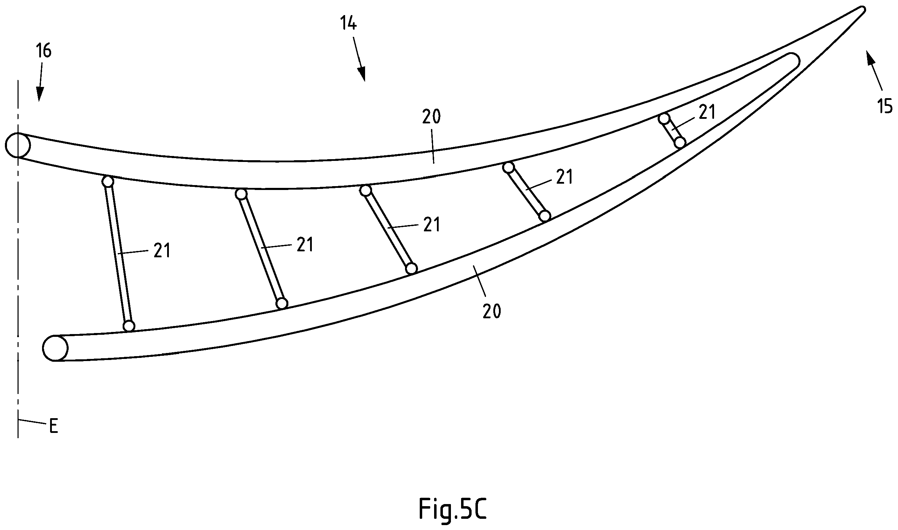

In der Fig. 5A ist das Fingerelement 14 aus Fig. 5 in einer gestreckten Ausrichtung dargestellt, bei der die Enden der Flankenelemente 20 in einer Ebene E angeordnet sind. Bei dem dargestellten und insoweit bevorzugten Fingerelement 14 sind die Flankenelemente 20 in dieser Stellung wenigstens im Wesentlichen symmetrisch zueinander ausgebildet. Wird gemäß Fig. 5B das obere Flankenelement 20 gegenüber der Ebene E in Richtung des freien Endes 15 des Fingerelements 14 verschoben, so krümmt bzw. schwenkt sich das Fingerelement 14 nach unten. Anders ausgedrückt, wird das Fingerelement 14 nach unten verstellt, wobei ein Fingerelement 14 bedarfsweise auch ohne eine Krümmung desselben, vorzugsweise insgesamt, nach unten oder oben verstellt werden kann. Die Krümmung des dargestellten und insoweit bevorzugten Fingerelements 14 ergibt sich infolge der Flexibilität der Flankenelemente 20 und der schwenkbaren Verbindungen zwischen den Flankenelementen 20 und den dazwischen vorgesehenen Stegen 21. Dabei ist zu beachten, dass die Flankenelemente 20 nicht zwingend über ihre gesamte Längserstreckung flexibel ausgebildet sein müssen, auch wenn dies oftmals bevorzugt sein wird. Es ist auch denkbar dass die Flankenelemente 20 starre Abschnitte aufweisen die miteinander schwenkbar, insbesondere gelenkig, vorzugsweise durch ein Scharnier, verbunden sind. Dabei sollten entsprechende Flankenelemente 20 zwischen zwei Stegen 21 wenigstes eine Schwenkverbindung aufweisen.

Das Fingerelement 14 krümmt sich gemäß Fig. 5C in analoger Weise nach oben, wenn das untere Flankenelement 20 gegenüber der Ebene E nach vorne in Richtung des freien Endes 15 des Fingerelements 14 verschoben wird. Auf diese Weise kann also ein Verstellen des freien Endes 15 des Fingerelements 14 bzw. ein schwenken des Fingerelements 14 nach unten erreicht werden.

Den Fig. 5A-C kann ferner entnommen werden, dass die Stege 21 zwischen den Flankenelementen 20 sich beim Krümmen des Fingerelements 14 in entgegengesetzte Richtungen neigen, wenn das Fingerelement 14 nach oben und nach unten verstellt wird. Zum Verstellen der Flankenelemente 20 analog zu den Fig. 5A-C kann eine nicht dargestellte Antriebseinheit 19 vorgesehen sein. Dabei sind geeignete Antriebseinheiten 19, wie etwa Linearantriebe aus dem Stand der Technik bekannt. Nicht dargestellt ist zudem, dass mehr als zwei, beispielweise wenigstens drei oder vier, Flankenelemente 20 vorgesehen sein können, etwa um das Fingerelement 14 beispielsweise nicht nur rauf und runter, sondern auch zur Seite zu verstellen. Der Einfachheit halber sind diese dann, insbesondere gleichmäßig, verteilt um eine Längsachse des Fingerelements 14 angeordnet. Die mehreren Flankenelemente 20 können dann, insbesondere mit freien Enden 15, in einer gemeinsamen Spitze der Fingereinheit 14 zusammenlaufen. Zudem oder alternativ können die Stege 21 vorzugsweise jeweils alle Flankenelemente 20 miteinander verbinden. Die dargestellten und insoweit bevorzugten Flankenelemente 20 sind streifenförmig ausgebildet. Es wäre aber auch eine plattenförmige oder stabförmige Ausgestaltung der Flankenelemente möglich, solange die Flankenelemente ein gegenseitiges Verschieben und Krümmen der Flankenelemente ermöglichen.

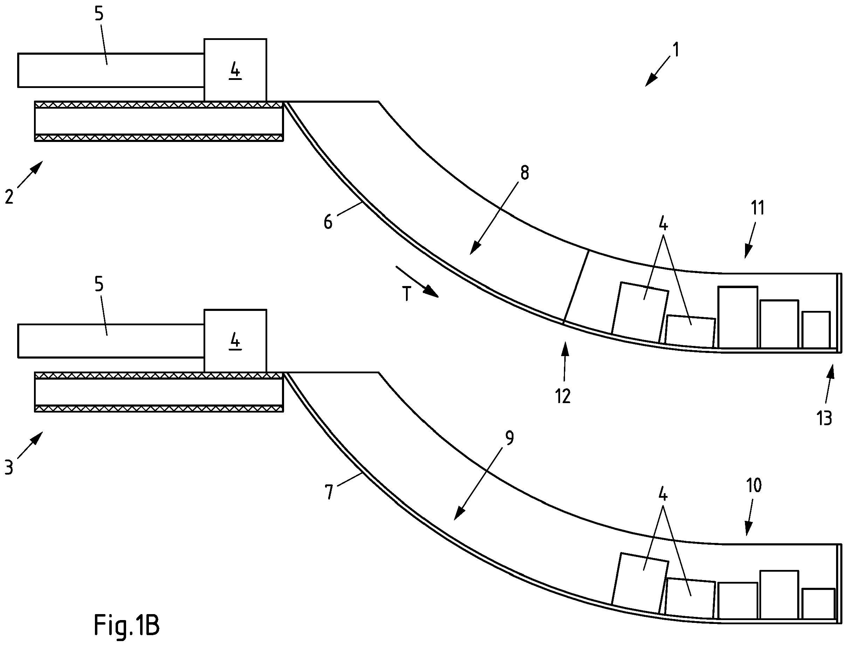

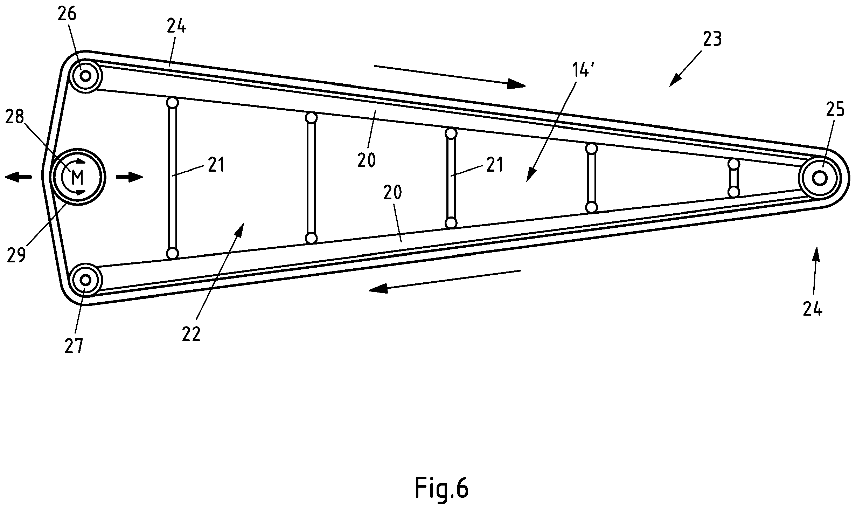

In der Fig. 6 ist ein Fingerelement 14' als Teil oder in Form eines Gurtförderers 23 dargestellt, wobei das Fingerelement 14' beim dargestellten und insoweit bevorzugten Ausführungsbeispiel die Tragstruktur 22 des Gurtförderers 23 bildet. Das Fingerelement 14' ist dabei prinzipiell analog zu dem in der Fig. 1 dargestellten Fingerelement 14 ausgebildet. Daher kann der Gurtförderer 23, insbesondere das freie Ende 24 des Gurtförderers 23, nach oben und nach unten verstellt werden. Der um das Fingerelement 14' längs der Flankenelemente 20 umlaufende Gurt 24 folgt dabei der Verstellung, insbesondere der Krümmung des Fingerelements 14' nach oben und nach unten. Der Gurt 24 läuft dabei endlos um die Tragstruktur 22 und damit um die Fingereinheit 14' um. Dazu weist das dargestellte und insoweit bevorzugte Fingerelement 14' mehrere Umlenkungen in Form von Umlenkrollen 25,26,27 auf. Eine Umlenkrolle 25 ist am freien Ende 15 des Fingerelements 14' und jeweils eine weitere Umlenkrolle 26,27 an den gegenüberliegenden Enden der Flankenelemente 20. Die Umlenkrollen 25,26,27 werden dabei von der Tragstruktur 22 des Fingerelements 14' getragen. Damit der Gurt 24 bedarfsweise auch im Falle eines gekrümmten Fingerelement 14' nahe an dem oberen Flankenelement 20 oder an beiden Flankenelementen 20 geführt wird, kann der Gurt 24 über geeignete Verbindungsmittel an wenigstens einer Stelle an wenigstens dem oberen Flankenelement 20 gehalten werden.

Der Gurt 24 des Fingerelements 14' kann durch die auf ein sich auf dem Fingerelement 14' befindendes Stückgut 4 wirkende Gewichtskraft angetrieben werden, um den Transport des Stückguts 4 entlang des Fingerelements 14' zu verbessern. Es kann aber auch ein motorischer Antrieb des Gurtes 24 vorgesehen sein, um den Gurt 24 zwangsweise anzutreiben und die Stückgüter in die gewünschte Richtung und/oder mit der gewünschten Geschwindigkeit zu transportieren. Der Antrieb 28 wirkt über eine Antriebsrolle 29, die bedarfsweise zum Spannen des Gurts 24 beispielsweise in Längsrichtung des Fingerelements 14' verstellt werden kann, auf den Gurt 24. Zudem können für einen möglichst schlupffreien Antrieb des Gurts 24 am Gurt 24 und an der Antriebsrolle 29 korrespondierende Verzahnungen vorgesehen sein, die miteinander kämmen. Anders als in der Fig. 6 dargestellt, kann die Tragstruktur des Fingerelements bedarfsweise noch weitere Bauteile aufweisen.

Der Gurt 24 des Gurtförderers 23, sei er motorisch angetrieben oder nicht, kann bedarfsweise lediglich um ein Fingerelement 14' umlaufen, wobei dann bedarfsweise jedes Fingerelement 14' einen separaten Gurt 24 aufweisen kann. So können die Stückgüter 4 sehr flexibel und an verschiedenen Stellen der Speichereinrichtung unterschiedlich gelenkt werden. Allerdings ist dann grundsätzlich der apparative und regelungstechnische Aufwand höher. Apparativ und regelungstechnisch einfacher ist es dagegen, wenn wenigstens ein Gurt 24 sich quer zur Rutsche 6 über eine Mehrzahl nebeneinander angeordneter Fingerelemente 14' erstreckt und um diese Mehrzahl an Fingerelementen 14' auch umläuft. Bedarfsweise kann auch ein einziger Gurt 24 um alle Fingerelemente 14' einer Speichereinrichtung umlaufen und dabei die Lücken zwischen den Fingerelementen 14' überdecken.

## Patentansprüche

1. Rutsche (6) für Stückgut (4), insbesondere Packstücke und/oder Sendungen, mit einem Rutschenboden (8) zum Herunterrutschen des Stückguts (4) mit wenigstens einer, vorzugsweise dem unteren Ende der Rutsche (6) zugeordneten Speichereinrichtung (11) für die entlang des Rutschenbodens (8) heruntergerutschten Stückgüter (4), wobei die Speichereinrichtung (11) von einer oberen Aufnahmestellung zum Aufnehmen der die Rutsche (6) herunterrutschenden Stückgüter (4) in eine untere Abgabestellung zur Abgabe der aufgenommenen Stückgüter (4) und zurück verstellbar, insbesondere schwenkbar, ausgebildet ist,
**dadurch gekennzeichnet, dass** die Speichereinrichtung (11) quer zum Rutschenboden (8) wenigstens ein Fingerelement (14), insbesondere eine Mehrzahl von, vorzugsweise voneinander beabstandeten, Fingerelementen (14), aufweist, dass die Fingerelemente (14) jeweils wenigstens zwei sich gemeinsam in Längsrichtung des Fingerelements (14) bis zum freien Ende des Fingerelements (14) erstreckende flexible Flankenelemente (20) aufweisen und dass die flexiblen Flankenelemente (20) in Längsrichtung der Fingerelemente (14) jeweils über eine Mehrzahl von Stegen (21) flexibel miteinander verbunden sind, so dass die freien Enden (15) der Fingerelemente (14) von einer unteren Stellung in eine obere Stellung und zurück verstellt werden können.

2. Rutsche nach Anspruch 1,
**dadurch gekennzeichnet, dass** die Speichereinrichtung (11), vorzugsweise das in Transportrichtung (T) der Stückgüter 4 entlang der Rutsche (6) hintere Ende (13) und/oder vordere Ende (12) der Speichereinrichtung (11), insbesondere nacheinander, vertikal verstellbar, vorzugsweise um wenigstens eine Schwenkachse schwenkbar, ist.

3. Rutsche nach Anspruch 1 oder 2,
**dadurch gekennzeichnet, dass** die freien Enden (15) der Fingerelemente (14) wenigstens teilweise entgegen der Transportrichtung (T) der Stückgüter (4) entlang des Rutschenbodens (8) weisen.

4. Rutsche nach Anspruch 3,
**dadurch gekennzeichnet, dass** die freien Enden (15) der Fingerelemente (14) das in der Transportrichtung (T) der Stückgüter (4) entlang der Rutsche (6) vordere Ende (12) der Speichereinrichtung (11) definieren und/oder dass die Fingerelemente (14) an einem Ende mit wenigstens einem Handelement (17) verbunden sind und, vorzugsweise, dass das Handelement (17) das in der Transportrichtung (T) der Stückgüter (4) entlang der Rutsche (6) hintere Ende (13) der Speichereinrichtung (11) definiert.

5. Rutsche nach Anspruch 3 oder 4,
**dadurch gekennzeichnet, dass** die freien Enden (15) der Fingerelemente (14) in einer vertikalen Richtung verstellbar, insbesondere schwenkbar, dass das Handelement (17) in einer vertikalen Richtung verstellbar, insbesondere schwenkbar ist und/oder dass die Fingerelemente (14) zum Krümmen in einer vertikalen Richtung, insbesondere gegenüber dem Handelement (17), ausgebildet sind.

6. Rutsche nach einem der Ansprüche 1 bis 5,
**dadurch gekennzeichnet, dass** die flexiblen Flankenelemente (20) in Längsrichtung der Fingerelemente (14) jeweils über eine Mehrzahl von Stegen (21) flexibel miteinander verbunden sind, so dass die freien Enden (15) der Fingerelemente (14) von einer unteren Stellung in eine obere Stellung und zurück in einer vertikalen Richtung, insbesondere gegenüber dem Handelement (17), gekrümmt werden können.

7. Rutsche nach Anspruch 6,
**dadurch gekennzeichnet, dass** die Stege (21) und die zugehörigen flexiblen Flankenelemente (20) jeweils einen spitzen Winkel α, vorzugsweise zwischen 10° und 80°, und einen stumpfen Winkel β, vorzugsweise zwischen 100° und 170° aufweisen und/oder dass die flexiblen Flankenelemente (20) der Fingerelemente (14) jeweils, insbesondere über eine Antriebseinheit (19), in Längsrichtung der Fingerelemente (14) derart gegeneinander verstellbar sind, so dass die Fingerelemente (14) durch ein Verstellen der flexiblen Flankenelemente (20) gegeneinander mehr oder weniger gekrümmt werden.

8. Rutsche nach einem der Ansprüche 1 bis 7,
**dadurch gekennzeichnet, dass** die Fingerelemente (14) eine flexible, die Zwischenräume zwischen den Fingerelementen (14) überbrückende Materialbahn (18) tragen und/oder dass die Fingerelemente (14) wenigstens eine um jeweils wenigstens ein Fingerelement (14) umlaufende und in Längsrichtung der Fingerelemente (14) angetriebene Materialbahn (18) aufweisen.

9. Sortiereinrichtung (1) für Stückgut (4), insbesondere Packstücke und/oder Sendungen, mit wenigstens zwei übereinander angeordneten Rutschen (6,7) für Stückgut (4),
**dadurch gekennzeichnet, dass** wenigstens die obere Rutsche (6) nach einem der Ansprüche 1 bis 8 ausgebildet ist und dass die Speichereinrichtung (11) der oberen Rutsche (6) von einer der oberen Rutsche (6) zugeordneten oberen Aufnahmestellung in Richtung der unteren Rutsche (7) in eine untere Abgabestellung und zurück verstellbar, insbesondere schwenkbar, ausgebildet ist.

10. Sortiereinrichtung nach Anspruch 9,
**dadurch gekennzeichnet, dass** die Speichereinrichtung (11) zur Abgabe der Stückgüter (4) von der oberen Rutsche (6) in die untere Rutsche (7) nach unten verstellbar, insbesondere schwenkbar, ist und, vorzugsweise, dass das in der Transportrichtung (T) der Stückgüter (4) entlang der oberen Rutsche (6) vordere Ende der Speichereinrichtung (11) wenigstes im Wesentlichen bis zur unteren Rutsche (7), insbesondere dem Rutschenboden (9) der unteren Rutsche (7), nach unten verstellbar, insbesondere schwenkbar, ausgebildet ist.

11. Sortiereinrichtung nach Anspruch 9 oder 10,
**dadurch gekennzeichnet, dass** das in Transportrichtung (T) der Stückgüter (4) entlang der oberen Rutsche (6) hintere Ende (13) der Speichereinrichtung (11) bis wenigstens im Wesentlichen auf Höhe eines zu dem Ende der unteren Rutsche (7) zugeordneten Auffangbereichs (10) für Stückgüter (4) nach unten verstellbar, insbesondere schwenkbar, ist.

12. Sortiereinrichtung nach einem der Ansprüche 9 bis 11,
**dadurch gekennzeichnet, dass** die obere Rutsche (6) mit einem oberen Ende an eine obere Transporteinrichtung (2) für zu sortierende Stückgüter (4), insbesondere in Form eines Gurtförderers, grenzt und/oder dass die untere Rutsche (7) mit einem oberen Ende an eine untere Transporteinrichtung (3) für zu sortierende Stückgüter (4), insbesondere in Form eines Gurtförderer, grenzt.

13. Verfahren zum Sortieren von Stückgütern (4), insbesondere Packstücke und/oder Sendungen, mit einer Sortiereinrichtung (1), vorzugsweise einer Sortiereinrichtung (1) nach einem der Ansprüche 9 bis 12, umfassend wenigstens eine Rutsche (6) nach einem der Ansprüche 1 bis 8,
- bei dem zu sortierende Stückgüter (4) von einer Transporteinrichtung (2) transportiert und wenigstens teilweise in die wenigstens eine Rutsche (6) sortiert werden,
- bei dem die in die wenigstens eine Rutsche (6) sortierten Stückgüter (4) nach dem Herunterrutschen des Rutschenbodens (8) der wenigstens einen Rutsche (6) von der in einer oberen Aufnahmestellung angeordneten Speichereinrichtung (11) aufgenommen werden,
- bei dem die Speichereinrichtung (11) von der oberen Aufnahmestellung in eine untere Abgabestellung verstellt, insbesondere geschwenkt, wird und
- bei dem die aufgenommenen Stückgüter (4) von der Speichereinrichtung (11) in der unteren Abgabestellung entnommen oder an ein unter der Speichereinrichtung (11) vorgesehenes Anlagenteil, insbesondere einer weiteren Rutsche (7), übergeben werden.

14. Verfahren nach Anspruch 13,
- bei dem beim Verstellen der Speichereinrichtung (11) von der oberen Aufnahmestellung in die untere Abgabestellung mehrere Fingerelemente (14) der Speichereinrichtung (11) nach unten gekrümmt werden und
- bei dem, vorzugsweise, die Fingerelemente (14) durch das Verstellen von Flankenelementen (20) der Fingerelemente (14) gegeneinander gekrümmt werden.

15. Verfahren nach Anspruch 13 oder 14,
bei dem die Speichereinrichtung (11), insbesondere das vordere Ende (12) der Speichereinrichtung (11) und/oder die Fingerelemente (14) der Speichereinrichtung (11), beim Verstellen der Speichereinrichtung (11) in die unteren Abgabestellung wenigstens im Wesentlichen bis auf den Rutschenboden (9) der unteren Rutsche (7) abgesenkt werden, so dass, vorzugsweise, der minimale Abstand zwischen der Speichereinrichtung (11), insbesondere dem vorderen Ende (12) der Speichereinrichtung (11) und/oder den Fingerelementen (14) der Speichereinrichtung (11), und dem Rutschenboden (9) der unteren Rutsche (7) geringer ist als die Höhe der von der Speichereinrichtung (11) aufgenommenen Stückgüter (4).

16. Verfahren nach einem der Ansprüche 13 bis 15,
bei dem die Speichereinrichtung (11), insbesondere das hintere Ende (12) der Speichereinrichtung (11) und/oder das Handelement (17) der Speichereinrichtung (11), beim Verstellen der Speichereinrichtung (11) in die untere Abgabestellung wenigstens im Wesentlichen auf einen dem hinteren Ende der unteren Rutsche (7) zugeordneten Auffangbereich (10) der unteren Rutsche (7) abgesenkt wird, so dass, vorzugsweise, der minimale Abstand zwischen der Speichereinrichtung (11), insbesondere dem hinteren Ende (13) der Speichereinrichtung (11) und/oder dem Handelement (17) der Speichereinrichtung (11), und dem Auffangbereich (10) der unteren Rutsche (7) geringer ist als die Höhe der von der Speichereinrichtung (11) aufgenommenen Stückgüter (4).

## Claims

1. Chute (6) for articles (4), in particular packages and/or consignments, having a chute base (8) for the article (4) to slide down, having at least one storage installation (11), preferably assigned to the lower end of the chute (6), for the articles (4) that have slid down along the chute base (8), wherein the storage installation (11) is configured to be adjustable, in particular pivotable, from an upper receiving position for receiving the articles (4) sliding down the chute (6) into a lower discharging position for discharging the received articles (4), and back again,
**characterized in that**
the storage installation (11) has, transversely to the chute base (8), at least one finger element (14), in particular a plurality of finger elements (14) that are preferably spaced-apart from one another, **in that** the finger elements (14) each have at least two flexible flank elements (20) that extend jointly in the longitudinal direction of the finger element (14) as far as the free end of the finger element (14), and **in that** the flexible flank elements (20) are each connected flexibly together in the longitudinal direction of the finger elements (14) via a plurality of crosspieces (21), such that the free ends (15) of the finger elements (14) can be adjusted from a lower position into an upper position and back again.

2. Chute according to Claim 1,
**characterized in that**
the storage installation (11), preferably the rear end (13) and/or front end (12) of the storage installation (11), as seen in the transporting direction (T) of the articles (4) along the chute (6), is vertically adjustable, preferably pivotable about at least one pivot axis, in particular one after the other.

3. Chute according to Claim 1 or 2,
**characterized in that**
the free ends (15) of the finger elements (14) are directed at least partially counter to the transporting direction (T) of the articles (4) along the chute base (8).

4. Chute according to Claim 3,
**characterized in that**
the free ends (15) of the finger elements (14) define the front end (12) of the storage installation (11), as seen in the transporting direction (T) of the articles (4) along the chute (6), and/or **in that** the finger elements (14) are connected at one end to at least one hand element (17), and, preferably, **in that** the hand element (17) defines the rear end (13) of the storage installation (11), as seen in the transporting direction (T) of the articles (4) along the chute (6).

5. Chute according to Claim 3 or 4,
**characterized in that**
the free ends (15) of the finger elements (14) are adjustable, in particular pivotable, in a vertical direction, **in that** the hand element (17) is adjustable, in particular pivotable, in a vertical direction, and/or **in that** the finger elements (14) are configured to curve in a vertical direction, in particular with respect to the hand element (17).

6. Chute according to one of Claims 1 to 5,
**characterized in that**
the flexible flank elements (20) are each connected flexibly together in the longitudinal direction of the finger elements (14) via a plurality of crosspieces (21), such that the free ends (15) of the finger elements (14) can from a lower position into an upper position and back again be curved in a vertical direction, in particular with respect to the hand element (17).

7. Chute according to Claim 6,
**characterized in that**
the crosspieces (21) and the associated flexible flank elements (20) each have an acute angle α, preferably between 10° and 80°, and an obtuse angle β, preferably between 100° and 170°, and/or **in that** the flexible flank elements (20) of the finger elements (14) are each adjustable with respect to one another in the longitudinal direction of the finger elements (14), in particular via a drive unit (19), such that the finger elements (14) are curved to a greater or lesser extent with respect to one another by adjustment of the flexible flank elements (20).

8. Chute according to one of Claims 1 to 7,
**characterized in that**
the finger elements (14) carry a flexible material web (18) that bridges the intermediate spaces between the finger elements (14), and/or **in that** the finger elements (14) have at least one material web (18) that circulates around in each case at least one finger element (14) and is driven in the longitudinal direction of the finger elements (14).

9. Sorting installation (1) for articles (4), in particular packages and/or consignments, having at least two chutes (6, 7), arranged one above the other, for articles (4), **characterized in that**
at least the upper chute (6) is configured according to one of Claims 1 to 8, and **in that** the storage installation (11) of the upper chute (6) is configured to be adjustable, in particular pivotable, from an upper receiving position, assigned to the upper chute (6), in the direction of the lower chute (7) into a lower discharging position, and back again.

10. Sorting installation according to Claim 9,
**characterized in that**
the storage installation (11) is adjustable, in particular pivotable, downwardly in order to discharge the articles (4) from the upper chute (6) into the lower chute (7), and, preferably, **in that** the front end of the storage installation (11), as seen in the transporting direction (T) of the articles (4) along the upper chute (6), is configured to be adjustable, in particular pivotable, downwards at least substantially as far as the lower chute (7), in particular the chute base (9) of the lower chute (7).

11. Sorting installation according to Claim 9 or 10,
**characterized in that**
the rear end (13) of the storage installation (11), as seen in the transporting direction (T) of the articles (4) along the upper chute (6), is adjustable, in particular pivotable, downwards at least substantially as far as the height of a collecting region (10), assigned to the end of the lower chute (7), for articles (4).

12. Sorting installation according to one of Claims 9 to 11,
**characterized in that**
the upper chute (6) adjoins, with an upper end, an upper transporting device (2) for articles (4) to be sorted, in particular in the form of a belt conveyor, and/or **in that** the lower chute (7) adjoins, with an upper end, a lower transporting device (3) for articles (4) to be sorted, in particular in the form of a belt conveyor.

13. Method for sorting articles (4), in particular packages and/or consignments, with a sorting installation (1), preferably a sorting installation (1) according to one of Claims 9 to 12, comprising at least one chute (6) according to one of Claims 1 to 8,
- in which articles (4) to be sorted are transported by a transporting device (2) and are sorted at least partially into the at least one chute (6),
- in which, after sliding down the chute base (8) of the at least one chute (6), the articles (4) sorted into the at least one chute (6) are received by the storage installation (11) arranged in an upper receiving position,
- in which the storage installation (11) is adjusted, in particular pivoted, from the upper receiving position into a lower discharging position, and
- in which the received articles (4) are removed from the storage installation (11) in the lower discharging position or are transferred to a plant part, in particular a further chute (7), provided under the storage installation (11).

14. Method according to Claim 13,
- in which, when the storage installation (11) is adjusted from the upper receiving position into the lower discharging position, a plurality of finger elements (14) of the storage installation (11) are curved downwards, and
- in which, preferably, the finger elements (14) are curved with respect to one another by the adjustment of flank elements (20) of the finger elements (14).

15. Method according to Claim 13 or 14,
in which the storage installation (11), in particular the front end (12) of the storage installation (11) and/or the finger elements (14) of the storage installation (11), is/are lowered at least substantially as far as the chute base (9) of the lower chute (7) when the storage installation (11) is adjusted into the lower discharging position, such that, preferably, the minimum spacing between the storage installation (11), in particular the front end (12) of the storage installation (11) and/or the finger elements (14) of the storage installation (11), and the chute base (9) of the lower chute (7) is less than the height of the articles (4) received by the storage installation (11).

16. Method according to one of Claims 13 to 15,
in which the storage installation (11), in particular the rear end (13) of the storage installation (11) and/or the hand element (17) of the storage installation (11), is lowered at least substantially onto a collecting region (10), assigned to the rear end of the lower chute (7), of the lower chute (7) when the storage installation (11) is adjusted into the lower discharging position, such that, preferably, the minimum spacing between the storage installation (11), in particular the rear end (13) of the storage installation (11) and/or the hand element (17) of the storage installation (11), and the collecting region (10) of the lower chute (7) is less than the height of the articles (4) received by the storage installation (11).

## Revendications

1. Glissière (6) pour marchandise au détail (4), en particulier des colis et/ou des envois, dotée d'un plancher de glissière (8), permettant de faire glisser la marchandise au détail (4), avec au moins un dispositif de stockage (11) associé, de préférence, à l'extrémité inférieure de la glissière (6) pour les marchandises au détail (4) qui ont glissé le long du plancher de glissière (8), où le dispositif de stockage (11) est conçu de manière à pouvoir être déplacé, notamment de manière à pouvoir pivoter, entre une position de réception supérieure pouvant recevoir les marchandises au détail (4) glissant le long de la glissière (6) et une position de distribution inférieure pour la distribution de marchandises au détail (4) réceptionnées et vice-versa,
**caractérisée en ce que**
le dispositif de stockage (11) présente, transversalement par rapport au plancher de glissière (8), au moins un élément en forme de doigt (14), en particulier une multitude d'éléments en forme de doigt (14), de préférence espacés l'un de l'autre, **en ce que** les éléments en forme de doigt (14) présentent respectivement au moins deux éléments de flanc flexibles (20) s'étendant ensemble dans la direction longitudinale de l'élément en forme de doigt (14) jusqu'aux extrémités libres de l'élément en forme de doigt (14) et **en ce que** les éléments de flanc flexibles (20) sont mutuellement reliés, de manière flexible, dans la direction longitudinale des éléments en forme de doigt (14), respectivement par l'intermédiaire d'une multitude de traverses (21), de sorte que les extrémités libres (15) des éléments en forme de doigt (14) peuvent être déplacées d'une position inférieure en une position supérieure et vice-versa.

2. Glissière selon la revendication 1,
**caractérisée en ce que**
le dispositif de stockage (11), de préférence l'extrémité arrière (13) et/ou l'extrémité avant (12) du dispositif de stockage (11) dans la direction de transport (T) des marchandises au détail (4) le long de la glissière (6), est susceptible de pouvoir être déplacé verticalement, en particulier successivement, , de préférence il est susceptible de pouvoir pivoter au moins autour d'un axe de pivotement.

3. Glissière selon la revendication 1 ou 2,
**caractérisée en ce que**
les extrémités libres (15) des éléments en forme de doigt (14) sont orientées, au moins partiellement, dans la direction opposée à la direction de transport (T) des marchandises au détail (4), le long du plancher de glissière (8).

4. Glissière selon la revendication 3,
**caractérisée en ce que**
les extrémités libres (15) des éléments en forme de doigt (14) définissent l'extrémité avant (12) du dispositif de stockage (11) dans la direction de transport (T) des marchandises au détail (4) le long de la glissière (6) et/ou **en ce que** les éléments en forme de doigt (14) sont reliés, au niveau d'une extrémité, avec au moins un élément manuel (17) et, de préférence, **en ce que** l'élément manuel (17) définit l'extrémité arrière (13) du dispositif de stockage (11) dans la direction de transport (T) des marchandises au détail (4) le long de la glissière (6).

5. Glissière selon la revendication 3 ou 4,
**caractérisée en ce que**
les extrémités libres (15) des éléments en forme de doigt (14) sont conçues de manière à pouvoir être déplacées, notamment de manière à pouvoir pivoter, dans une direction verticale, **en ce que** l'élément manuel (17) peut être déplacé, notamment peut être pivoté, dans une direction verticale et/ou **en ce que** les éléments en forme de doigt (14) sont conçus pour se courber dans une direction verticale, notamment par rapport à l'élément manuel (17).

6. Glissière selon l'une des revendications 1 à 5,
**caractérisée en ce que**
les éléments de flanc flexibles (20) sont mutuellement reliés, de manière flexible, dans la direction longitudinale des éléments en forme de doigt (14) respectivement par l'intermédiaire d'une multitude de traverses (21), de sorte que les extrémités libres (15) des éléments en forme de doigt (14) peuvent être courbées d'une position inférieure dans une position supérieure et vice-versa dans une direction verticale, notamment par rapport à l'élément manuel (17).

7. Glissière selon la revendication 6,
**caractérisée en ce que**
les traverses (21) et les éléments de flanc flexibles (20) associés présentent respectivement un angle aigu α, de préférence entre 10° et 80°, et un angle obtus β, de préférence entre 100° et 170° et/ou **en ce que** les éléments de flanc flexibles (20) des éléments en forme de doigt (14) sont susceptibles de pouvoir être déplacés l'un contre l'autre, notamment par l'intermédiaire d'une unité d'entraînement (19), respectivement en direction longitudinale des éléments en forme de doigt (14), de telle sorte que les éléments en forme de doigt (14) peuvent être plus ou moins courbés par un déplacement des éléments de flanc flexibles (20) l'un contre l'autre.

8. Glissière selon l'une des revendications 1 à 7,
**caractérisée en ce que**
les éléments en forme de doigt (14) portent une bande de matière flexible (18) chevauchant les espaces intermédiaires entre les éléments en forme de doigt (14) et/ou **en ce que** les éléments en forme de doigt (14) présentent au moins une bande de matière (18) tournant respectivement au moins autour d'un élément en forme de doigt (14) et entraînée en direction longitudinale de l'élément en forme de doigt (14).

9. Dispositif de tri (1) pour marchandise au détail (4), en particulier des colis et/ou des envois, doté d'au moins de deux glissières (6, 7) agencées superposées pour la marchandise au détail (4),
**caractérisé en ce**
**qu'**au moins la glissière supérieure (6) est conçue selon l'une des revendications 1 à 8 et **en ce que** le dispositif de stockage (11) de la glissière supérieure (6) est conçu de sorte à pouvoir être déplacé, notamment de sorte à pouvoir pivoter, entre une position de réception supérieure associée à la glissière supérieure (6) en direction de la glissière inférieure (7) et une position de distribution inférieure et vice-versa.

10. Dispositif de tri selon la revendication 9,
**caractérisée en ce que**
le dispositif de stockage (11) est susceptible de pouvoir être déplacé vers le bas, notamment de pouvoir pivoter, de la glissière supérieure (6) vers la glissière inférieure (7) pour la distribution des marchandises au détail (4), et, de préférence, **en ce que** l'extrémité avant du dispositif de stockage (11) est conçue de sorte à pouvoir être déplacée vers le bas, notamment à pouvoir pivoter, dans la direction de transport (T) des marchandises au détail (4) le long de la glissière supérieure (6), au moins essentiellement jusqu'à la glissière inférieure (7), notamment jusqu'au plancher de glissière (9) de la glissière inférieure (7).

11. Dispositif de tri selon la revendication 9 ou 10,
**caractérisé en ce que**
l'extrémité arrière (13) du dispositif de stockage (11) est susceptible de pouvoir être déplacée vers le bas, notamment de pouvoir pivoter, dans la direction de transport (T) des marchandises au détail (4) le long de la glissière supérieure (6), essentiellement jusqu'à hauteur au moins d'une zone de collecte (10) pour la marchandises au détail (4) associée à l'extrémité de la glissière inférieure (7).

12. Dispositif de tri selon l'une des revendications 9 à 11,
**caractérisé en ce que**
la glissière supérieure (6) confine, au niveau d'une extrémité supérieure, avec un dispositif de transport supérieur (2), notamment en forme d'un convoyeur à bande, pour les marchandises au détail (4) à trier et/ou **en ce que** la glissière inférieure (7) confine, au niveau d'une extrémité supérieure, avec un dispositif de transport inférieur (3), notamment en forme d'un convoyeur à bande, pour les marchandises au détail (4) à trier.

13. Procédé de tri de marchandises au détail (4), en particulier des colis et/ou des envois, doté d'un dispositif de tri (1), de préférence un dispositif de tri (1) selon l'une des revendications 9 à 12, comportant au moins une glissière (6) selon l'une des revendications 1 à 8,
- dans lequel les marchandises au détail (4) à trier sont transportées par un dispositif de transport (2) et sont triées, au moins partiellement, dans la au moins une glissière (6),
- dans lequel les marchandises au détail (4) triées dans la au moins une glissière (6), après le glissement vers le bas du plancher de glissière (8) de ladite au moins une glissière (6), sont réceptionnées par le dispositif de stockage (11) agencé dans une position de réception supérieure,
- dans lequel le dispositif de stockage (11) est déplacé, notamment pivoté, entre la position de réception supérieure et une position de distribution inférieure et
- dans lequel les marchandises au détail (4) réceptionnées sont extraites dans la position de distribution inférieure du dispositif de stockage (11) ou sont transférées à une partie d'installation prévue sous le dispositif de stockage (11), notamment à une autre glissière (7).

14. Procédé selon la revendication 13,
- dans lequel, lors du déplacement du dispositif de stockage (11) de la position de réception supérieure à la position de distribution inférieure, plusieurs éléments en forme de doigt (14) du dispositif de stockage (11) sont courbés vers le bas et
- dans lequel, de préférence, les éléments en forme de doigt (14) sont courbés l'un contre l'autre par le déplacement des éléments de flanc (20) des éléments en forme de doigt (14).

15. Procédé selon la revendication 13 ou 14,
lors duquel le dispositif de stockage (11), en particulier l'extrémité avant (12) du dispositif de stockage (11) et/ou les éléments en forme de doigt (14) du dispositif de stockage (11), lors du déplacement du dispositif de stockage (11) dans la position de distribution inférieure, est abaissé au moins essentiellement jusqu'au niveau du plancher de glissière (9) de la glissière inférieure (7), de telle sorte que, de préférence, la distance minimale entre le dispositif de stockage (11), notamment entre l'extrémité avant (12) du dispositif de stockage (11) et/ou les éléments en forme de doigt (14) du dispositif de stockage (11), et le plancher de glissière (9) de la glissière inférieure (7) est inférieure par rapport à la hauteur des marchandises au détail (4) réceptionnées par le dispositif de stockage (11).

16. Procédé selon l'une des revendications 13 à 15,
dans duquel le dispositif de stockage (11), en particulier l'extrémité arrière (13) du dispositif de stockage (11) et/ou l'élément manuel (17) du dispositif de stockage (11), lors du déplacement du dispositif de stockage (11) dans la position de distribution inférieure, est abaissé au moins essentiellement au niveau d'une zone de collecte (10) de la glissière inférieure (7) associée à l'extrémité arrière de la glissière inférieure (7), de telle sorte que, de préférence, la distance minimale entre le dispositif de stockage (11), en particulier entre l'extrémité arrière (13) du dispositif de stockage (11) et/ou l'élément manuel (17) du dispositif de stockage (11), et la zone de collecte (10) de la glissière inférieure (7) est inférieure par rapport à la hauteur des marchandises au détail (4) réceptionnées par le dispositif de stockage (11).
